# FASCICULE DE BREVET EUROPEEN

(11) **EP 3 114 720 B1**
(45) Date de publication et mention de la délivrance du brevet: **19.06.2019**
(21) Numéro de dépôt: 15706841.2
(22) Date de dépôt: 02.03.2015
(51) Int. Cl.: H01M 2/20, H01M 2/10, H01M 2/30

(54) **PIÈCE D'ASSEMBLAGE ET DE CONNEXION ÉLECTRIQUE D'AU MOINS DEUX CELLULES DE STOCKAGE D'ÉNERGIE ÉLECTRIQUE**
MONTAGEELEMENT UND ELEKTRISCHE VERBINDUNG VON MINDESTENS ZWEI ENERGIESPEICHERZELLEN
MEMBER FOR ASSEMBLY AND ELECTRICAL CONNECTION OF AT LEAST TWO ELECTRICAL ENERGY STORAGE CELLS

(30) Priorité: 04.03.2014 FR 1451743
(43) Date de publication de la demande: 11.01.2017
(73) Titulaire: Commissariat à l'Énergie Atomique et aux Énergies Alternatives, 75015 Paris (FR)
(72) Inventeur: BERTHE DE POMMERY, Yves, 54380 Dieulouard (FR); AZAIS, Philippe, 38120 Saint Égrève (FR); PICARD, Lionel, 38170 Seyssinet-Pariset (FR); TURIN, Guillaume, 59000 Lille (FR)
(74) Mandataire: Brevalex
(86) Numéro de dépôt international: PCT/EP2015/054284
(87) Numéro de publication internationale: WO 2015/132192

(56) Documents cités:
- EP-A1- 1 901 368
- US-A- 1 659 463
- US-A1- 2008 182 168
- US-A1- 2009 123 820
- US-A1- 2010 143 786
- US-A1- 2010 216 008

## Description

### DOMAINE TECHNIQUE

La présente invention se rapporte au domaine des cellules de stockage d'énergie électrique, et notamment au domaine des cellules électrochimiques élémentaires, primaires ou secondaires. De telles cellules sont destinées à être assemblées au sein de modules eux-mêmes assemblés entre eux pour former un système de stockage d'énergie, par exemple un pack batterie. Plus particulièrement, l'invention concerne le domaine des systèmes d'assemblage et de connexion électrique intégrés à de telles cellules de stockage d'énergie électrique.

L'invention s'applique préférentiellement aux cellules électrochimiques élémentaires qui forment des générateurs électrochimiques. Toutefois, elle peut également concerner les condensateurs et les supercondensateurs électrochimiques ou diélectriques, par exemple.

Elle trouve des applications dans de nombreux domaines de l'industrie, notamment pour des applications stationnaires ou embarquées, en particulier pour le domaine de l'alimentation électrique des véhicules de transport, terrestres, aériens et/ou nautiques, par exemple pour l'alimentation électrique des véhicules hybrides et/ou électriques pour lesquels un agencement d'un grand nombre de cellules de stockage d'énergie électrique est requis.

Parmi les cellules électrochimiques élémentaires, trois principaux types de géométrie d'architecture sont couramment utilisés. Ainsi, de façon classique et connue en soi, les cellules peuvent présenter une géométrie cylindrique, une géométrie prismatique ou une géométrie en sachet/empilement (appelée encore « pouch-cell » en anglais).

De façon préférentielle, l'invention s'applique à des cellules de stockage électrique de géométrie prismatique et/ou cylindrique, bien qu'elle puisse également être concernée par d'autres types de géométrie des cellules.

Elle propose ainsi une pièce d'assemblage et de connexion électrique d'au moins deux cellules de stockage d'énergie électrique, une cellule de stockage d'énergie électrique apte à être assemblée et connectée électriquement à au moins une autre cellule du même type par l'intermédiaire d'une telle pièce d'assemblage et de connexion, un ensemble comportant au moins deux cellules de stockage d'énergie électrique et une pièce d'assemblage et de connexion desdites cellules, un module électrique d'assemblage comportant une pluralité de pièces d'assemblage et de connexion et une pluralité de cellules de stockage d'énergie électrique, un système de stockage d'énergie comportant une pluralité de tels modules d'assemblage, ainsi qu'un procédé de fabrication d'une telle pièce d'assemblage et de connexion électrique et/ou d'une telle cellule de stockage d'énergie électrique.

### ÉTAT DE LA TECHNIQUE ANTÉRIEURE

Les accumulateurs sont des systèmes permettant de stocker de l'énergie électrique sous forme chimique. Ils sont basés sur un système électrochimique réversible, c'est-à-dire rechargeable. Cependant, toutes les propositions énoncées ci-après restent valables pour des systèmes primaires (non rechargeables), sauf mention contraire.

Le système de stockage d'énergie électrochimique est un assemblage de modules électrochimiques, eux-mêmes assemblages de cellules électrochimiques élémentaires qui constituent des accumulateurs. Au sein du système de stockage d'énergie, les cellules électrochimiques sont reliées et gérées par une électronique de contrôle, encore appelée électronique BMS pour « Battery Management System » en anglais, qui permet d'optimiser la charge et la décharge et de prolonger la durée de vie.

Les accumulateurs ou cellules contiennent des réactifs chimiques qui, une fois activés, permettent de fournir de l'électricité à la demande. Ces réactions électrochimiques sont activées au sein de la cellule électrochimique élémentaire, entre une électrode positive et une électrode négative baignant dans un électrolyte, lorsqu'une charge électrique est branchée aux bornes de la cellule. A titre d'exemple, la technologie Li-ion consiste à utiliser la circulation électrochimique de l'ion lithium dans deux matériaux et à des valeurs de potentiel différentes : l'électrode positive et l'électrode négative constituent les deux potentiels d'oxydoréduction, et la différence de potentiel crée la tension au sein de la batterie. En cours d'utilisation (l'accumulateur se décharge), l'électrode négative relâche le lithium sous forme ionique Li⁺. Les ions Li⁺ migrent alors vers l'électrode positive, via l'électrolyte conducteur ionique. Le passage de chaque ion Li⁺ au sein de l'accumulateur est compensé par le passage d'un électron dans le circuit externe (courant circulant à partir des bornes de l'accumulateur), en sens inverse, créant ainsi le courant électrique permettant de faire fonctionner le dispositif associé à la batterie. Il y a alors du courant électrique jusqu'à ce qu'il n'y ait plus de lithium au sein de l'électrode négative : l'accumulateur est alors déchargé et son rechargement se fait selon le processus inverse.

Afin de pouvoir assembler et connecter les cellules entre elles, que ce soient des cellules électrochimiques élémentaires comme présentées ci-dessus ou des cellules de stockage d'énergie électrique de façon plus générale, il est prévu sur celles-ci des systèmes de connexion électrique.

Actuellement, les systèmes de connexion électrique utilisés sont classiquement réalisés par une pièce conductrice extérieure, typiquement une patte de connexion rapportée reliant les cellules entre elles, et deux bornes électriques apparentes positive et négative, situées soit sur une même face (cas des batteries de véhicule automobile par exemple), soit sur des faces opposées.

Ces types de systèmes de connexion électrique s'avèrent toutefois ne pas être satisfaisants du fait de leur dangerosité, notamment dans le domaine des éléments de puissance, à la fois pour les opérateurs et pour la cellule de stockage elle-même. En effet, la pièce conductrice extérieure et les bornes apparentes augmentent les risques de court-circuit.

Dans l'état de la technique antérieure, il existe différentes manières de connecter électriquement les cellules de stockage d'énergie électrique entre elles. Les deux principales réalisations sont notamment la connexion des cellules par l'intermédiaire de tiges de connexion conductrices, comme par exemple selon le brevet US 7,393,608 B1, et la connexion des cellules par l'intermédiaire du module d'assemblage qui les comporte et/ou du système de stockage d'énergie qui comporte le module d'assemblage, comme par exemple selon la demande de brevet US 2012/0009447 A1 ou le brevet US 7,923,144 B1.

Lors de l'utilisation de tiges de connexion conductrices entre les cellules, il existe soit une mise en module « rudimentaire », soit une mise en module d'assemblage et/ou pack d'assemblage. La mise en module et/ou pack d'assemblage peut permettre un positionnement et un maintien des cellules, ainsi que d'autres éléments (capteurs, communication avec les autres systèmes, contrôle électrique et thermique, ...), les tiges de connexion conductrices étant ajoutées lors de la mise en module et/ou pack d'assemblage. Dans la mise en module « rudimentaire », les autres éléments sont rajoutés et le tout est maintenu en position par cerclage.

Une autre méthode de connexion électrique des cellules consiste en la mise en contact des bornes qui dépassent des cellules, comme par exemple selon le brevet US 7,914,923 B1 et US 6,673,485 B1.

Par ailleurs, d'un point de vue sécuritaire, la demande de brevet US 2012/0058382 A1 propose un système de connectiques rapportées pour éviter les chocs électriques, au montage et après montage, et pour permettre de déconnecter les cellules en cas d'accident. La demande de brevet US 2013/0029201 A1 décrit une mise en module de cellules fines avec un seul connecteur externe pour chaque pôle des cellules. Ce connecteur, en réduisant le nombre total de pièces, a pour but de limiter les risques de court-circuit.

En outre, pour la modularité des cellules, l'art antérieur décrit le plus souvent un système de stockage d'énergie mis à la forme souhaitée de sorte qu'il soit rempli avec le nombre requis de cellules ou modules. Les systèmes de contrôle électrique et thermique sont rajoutés dans l'espace restant du système de stockage d'énergie. Dans certains cas, pour faciliter la mise en module ou si celle-ci n'est pas requise, il existe alors des montages moins conventionnels, comme décrit par exemple dans le modèle d'utilité CN 202434609 U, où le système de connexion électrique des cellules donne à l'assemblage les formes et propriétés d'une chaîne à rouleaux. Une autre méthode d'assemblage peut consister, comme décrit par exemple dans la demande de brevet US 2008/0199770 A1, à utiliser un fil qui traverse les éléments pour les maintenir en position, le contact électrique se faisant alors soit par le fil (électriquement conducteur), soit par contact entre les différents éléments (le fil étant alors isolant).

Néanmoins, dans la plupart de ces solutions de l'art antérieur tel que le brevet EP1901368 on retrouve des cellules de stockage d'énergie électrique réalisées avec un revêtement conducteur, typiquement en aluminium, en contact avec l'une des bornes de la cellule, et toujours des connectiques de cellule apparentes d'un même côté ou d'un côté et de l'autre de la cellule. Or, comme indiqué précédemment, ce type de cellule occasionne des risques élevés pour la santé de l'opérateur et le bon fonctionnement de la cellule, notamment dans le cas d'une cellule à haute énergie. Les risques pour l'opérateur sont de nature électrique et provoqués par la possibilité de pouvoir toucher les deux bornes ou des pièces conductrices en contact avec les bornes. De plus, les risques pour la cellule sont d'obtenir une mise en court-circuit des deux bornes qui peut entraîner la dégradation ou un échauffement important de la cellule.

En outre, pour la plupart des solutions de l'art antérieur, la connexion électrique des différentes cellules de stockage se fait lors de la mise en module et/ou pack d'assemblage en se servant de celui-ci, ce qui nécessite d'adapter le module et/ou le pack en fonction des cellules utilisées. Par ailleurs, la possibilité de mise en module et/ou pack d'assemblage des cellules de stockage consistant à assembler plusieurs cellules entre elles en les compressant à l'aide d'un cerclage et à les connecter entre elles a pour effet d'obtenir des modules d'assemblage de forme rectangulaire, ce qui limite les possibilités de volume utilisable par le système de stockage d'énergie final pour l'application visée.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention vise notamment à proposer un nouveau principe d'assemblage modulaire et de connexion sécuritaire et non court-circuitable de cellules de stockage d'énergie électrique selon la revendication 1.

L'invention a ainsi pour objet, selon l'un de ses aspects, une pièce d'assemblage et de connexion électrique d'au moins deux cellules de stockage d'énergie électrique, destinées à être intégrées au sein d'un module électrique d'assemblage d'un système de stockage d'énergie,
caractérisée en ce que la pièce comporte des premier et deuxième moyens de raccordement de la pièce respectivement auxdites au moins deux cellules de stockage d'énergie électrique, les premier et deuxième moyens de raccordement étant configurés pour permettre le passage d'axes de raccordement permettant l'assemblage et la connexion électrique entre la pièce et chacune desdites au moins deux cellules de stockage d'énergie électrique.

Grâce à l'invention, il est possible d'obtenir un assemblage modulaire et une connexion sécuritaire et non court-circuitable entre les cellules de stockage d'énergie électrique.

La pièce d'assemblage et de connexion électrique selon l'invention peut en outre comporter l'une ou plusieurs des caractéristiques suivantes prises isolément ou suivant toutes combinaisons techniques possibles.

De façon avantageuse, la partie extérieure de la pièce d'assemblage et de connexion électrique, en particulier la ou les coques formant son revêtement extérieur, comporte un matériau isolant électriquement.

Par ailleurs, les premier et deuxième moyens de raccordement peuvent avantageusement être configurés pour former avec les axes de raccordement un système d'assemblage mécanique et de connexion électrique du type charnière entre la pièce et chacune desdites au moins deux cellules de stockage d'énergie électrique.

Les premier et deuxième moyens de raccordement peuvent respectivement comporter des premier et deuxième logements aptes à être traversés par des axes de raccordement pour l'assemblage et la connexion électrique de la pièce avec chacune desdites au moins deux cellules de stockage d'énergie électrique.

Chacun des premier et deuxième logements peut comporter au moins un collecteur de courant négatif ou positif, notamment sous forme au moins partiellement cylindrique, destiné à épouser au moins partiellement la forme d'un axe de raccordement.

Le collecteur de courant peut par exemple être réalisé par une plaque déformable, étant par exemple formé par une plaque déformée de façon sensiblement entièrement cylindrique ou une plaque déformée de façon sensiblement semi-cylindrique.

Les premier et deuxième logements peuvent être formés dans la pièce de façon sensiblement parallèle entre eux.

La distance entre les premier et deuxième logements peut être supérieure ou égale à l'épaisseur d'une cellule de stockage d'énergie électrique.

Les premier et deuxième logements peuvent être formés dans la pièce de façon sensiblement orthogonale entre eux.

La pièce peut être divisée en au moins deux parties aptes à être entraînées en rotation l'une par rapport à l'autre.

La rotation d'une partie par rapport à l'autre partie peut être limitée par l'utilisation d'un système d'arrêt en rotation, et notamment limitée à une rotation maximale de 180°.

La pièce peut comporter un système d'accroche de moyens de maintien en position de plusieurs cellules entre elles, notamment sous la forme d'une gorge, ou d'un trou réalisé de part en part à mi-distance de deux axes de raccordement.

La pièce peut comporter un ou plusieurs systèmes électroniques embarqués.

La ou les pièces de raccordement (pièces de connexion mécanique) peuvent constituent des fusibles électriques intercellules.

L'invention a par ailleurs pour objet, selon un autre de ses aspects, une cellule de stockage d'énergie électrique, destinée à être intégrée au sein d'un module électrique d'assemblage d'un système de stockage d'énergie, caractérisée en ce que la cellule est configurée pour être assemblée et connectée électriquement à au moins une pièce d'assemblage et de connexion électrique telle que définie précédemment, la cellule comportant, sur au moins l'une de ses faces, au moins un moyen de réception d'une pièce d'assemblage et de connexion électrique, ledit au moins un moyen de réception étant configuré pour permettre le passage d'au moins un axe de raccordement permettant l'assemblage et la connexion électrique entre la pièce et la cellule de stockage d'énergie électrique.

La cellule peut comporter, sur une première face, un premier moyen de réception d'une première pièce d'assemblage et de connexion électrique et, sur une deuxième face, notamment opposée à la première face, un deuxième moyen de réception d'une deuxième pièce d'assemblage et de connexion électrique, chacun des premier et deuxième moyens de réception étant configuré pour permettre le passage d'un axe de raccordement de façon à permettre respectivement l'assemblage et la connexion électrique des première et deuxième pièces d'assemblage et de connexion électrique avec la cellule de stockage d'énergie électrique.

La première face de la cellule peut comporter deux portions de cellule s'étendant en relief depuis la première face et définissant entre elles un premier logement pour recevoir la première pièce d'assemblage et de connexion électrique. La deuxième face de la cellule peut comporter deux portions de cellule s'étendant en relief depuis la deuxième face et définissant entre elles un deuxième logement pour recevoir la deuxième pièce d'assemblage et de connexion électrique.

Chaque portion de cellule en relief peut comporter un trou permettant le passage d'un axe de raccordement pour l'assemblage et la connexion électrique de la cellule avec une pièce d'assemblage et de connexion électrique.

Les deux portions de cellule de la première face peuvent constituer deux bornes de même polarité. Les deux portions de cellule de la deuxième face peuvent constituer deux bornes de même polarité, opposée à la polarité des deux portions de cellule de la première face, de façon à permettre un montage en série de la cellule.

Les deux portions de cellule de la première face peuvent constituer respectivement une borne de polarité positive et une borne de polarité négative. Les deux portions de cellule de la deuxième face peuvent constituer respectivement une borne de polarité positive et une borne de polarité négative, les bornes de polarité positive étant notamment situées d'un même côté de la cellule et les bornes de polarité négative étant notamment situées d'un même autre côté de la cellule, de façon à permettre un montage en série ou en parallèle de la cellule.

La cellule peut être de géométrie d'architecture prismatique, comportant notamment un premier moyen de réception sur une première face de la cellule et un deuxième moyen de réception sur une deuxième face de la cellule, les première et deuxième faces étant opposées l'une à l'autre et situées notamment dans l'épaisseur de la cellule.

La cellule peut être de géométrie d'architecture cylindrique, comportant notamment un premier moyen de réception sur une première face de la cellule et un deuxième moyen de réception sur une deuxième face de la cellule, les première et deuxième faces étant opposées l'une à l'autre et situées notamment sur les deux faces planes de la cellule.

En outre, l'invention a également pour objet, selon un autre de ses aspects, un ensemble, caractérisé en ce qu'il comporte :
- au moins deux cellules de stockage d'énergie électrique telles que définies précédemment,
- au moins une pièce d'assemblage et de connexion électrique telle que définie précédemment, permettant l'assemblage et la connexion électrique desdites au moins deux cellules de stockage d'énergie électrique.

L'ensemble peut comporter de plus au moins deux axes de raccordement pour l'assemblage et la connexion électrique desdites au moins deux cellules de stockage d'énergie électrique et de ladite au moins une pièce d'assemblage et de connexion électrique, l'un desdits au moins deux axes de raccordement étant monté entre ladite au moins une pièce d'assemblage et de connexion électrique et l'une desdites au moins deux cellules de stockage d'énergie électrique, et l'autre desdits au moins deux axes de raccordement étant monté entre ladite au moins une pièce d'assemblage et de connexion électrique et l'autre desdites au moins deux cellules de stockage d'énergie électrique.

Lesdits au moins deux axes de raccordement peuvent présenter une forme cylindrique.

Lesdits au moins deux axes de raccordement peuvent être montés en rotation sur ladite au moins une pièce d'assemblage et de connexion électrique et lesdites au moins deux cellules de stockage d'énergie électrique.

Au moins un axe de raccordement peut être surmonté d'un bouchon isolant et/ou comporter une partie enrobée en un matériau isolant et/ou comporter un détrompeur.

L'invention a aussi pour objet, selon un autre de ses aspects, un module électrique d'assemblage d'un système de stockage d'énergie, caractérisé en ce qu'il comporte :
- une pluralité de pièces d'assemblage et de connexion électrique telles que définies précédemment,
- une pluralité de cellules de stockage d'énergie électrique telles que définies précédemment, chaque cellule étant assemblée et connectée électriquement à au moins une autre cellule du même type par l'intermédiaire d'au moins une des pièces d'assemblage et de connexion électrique.

Le module peut préférentiellement être un module électrochimique d'assemblage comportant un assemblage de plusieurs cellules électrochimiques élémentaires.

Le module peut comporter des moyens de maintien en position des cellules de stockage d'énergie électrique.

Les moyens de maintien en position peuvent comporter des fils et/ou des câbles.

Les moyens de maintien en position peuvent être entrecroisés perpendiculairement entre eux au sein du module d'assemblage.

Les pièces d'assemblage et de connexion électrique peuvent comporter chacune un système d'accroche des moyens de maintien en position.

Le module peut comporter une pluralité de systèmes de refroidissement disposés dans les espaces interstitiels entre les cellules.

De plus, l'invention a pour objet, selon un autre de ses aspects, un système de stockage d'énergie, caractérisé en ce qu'il comporte un assemblage de plusieurs modules tels que définis précédemment.

Enfin, l'invention a également pour objet un procédé de fabrication d'une pièce d'assemblage et de connexion électrique selon la revendication 13, telle que définie précédemment et/ou
d'une cellule de stockage d'énergie électrique telle que définie précédemment, caractérisé en ce qu'il comporte une ou plusieurs des étapes suivantes :
- réaliser deux demi-parties semblables destinées à former ensemble la pièce d'assemblage et de connexion électrique, notamment deux demi-coques formant le revêtement de la pièce,
- assembler les deux demi-parties pour former la pièce d'assemblage et de connexion électrique,
- réaliser un ou plusieurs collecteurs de courant en une ou deux parties, aptes à se déformer pour épouser sensiblement la forme d'un axe de raccordement destiné à être inséré dans la pièce d'assemblage et de connexion,
- réaliser la cellule de stockage d'énergie électrique à partir d'un coeur de cellule de stockage d'énergie électrique sous la forme d'un bobineau ou d'un stack.

Les deux demi-parties peuvent être réalisées dans un matériau répondant aux exigences mécaniques, thermiques, électriques et/ou autres conditions d'utilisation de l'application ciblée.

Les deux demi-parties peuvent par exemple être assemblées par vissage, collage, soudure, par présence d'un ergot de fixation, sertissage, entre autres.

Chaque demi-partie de la pièce peut comporter une forme pour maintenir un ou plusieurs collecteurs de courant en position et une nervure centrale pour séparer les axes de raccordement coaxiaux et leur collecteur de courant, évitant ainsi de mettre en court-circuit les bornes d'une même cellule.

Avantageusement, pour des raisons de sécurité électrique, le revêtement (ou « packaging » en anglais) de la pièce, notamment les deux demi-parties, peut être réalisé dans un matériau plastique, notamment une résine thermodurcissable (par exemple époxy, vinylique, méthacryliques, silicone, polyuréthane, polyimides, phénoliques, formica, bakélite, polyesters insaturés, entre autres) ou thermoplastique (par exemple ABS, HDPE, LDPE, LLDPE, PA, PEEK, PE, PET, PETE, PC, PMMA, POM, PP, PS, PPS, PTFE, PVC, entre autres), chargée ou non en fibres ou renforcée par une matrice tissée ou non tissée, par exemple, carbone, aramide, verre, céramiques (notamment carbure de silicium, alumine, oxyde de silicium, mullite, nitrure d'aluminium, nitrure de silicium, oxyde de zirconium, zircone, nitrure de bore), fibres bio-sourcées (notamment lin, chanvre, ortie, bananier, noix de coco, palmier, dattier, bambou). Pour modifier les caractéristiques de ce matériau, il est possible d'ajouter des charges ou des additifs. Le revêtement, notamment les deux demi-parties, peut alors être réalisé par moulage, injection ou tout autre procédé de mise en forme des matériaux plastiques.

Les axes de raccordement peuvent être montés en force dans la cellule ou dans la pièce d'assemblage et de connexion.

Le ou les collecteurs de courant peuvent comporter une forme apte à accueillir le câblage électrique, et peuvent être maintenus en place dans la pièce d'assemblage et de connexion électrique par la forme du revêtement ou par une pièce ajoutée au revêtement de la pièce d'assemblage et de connexion électrique. Le ou les collecteurs de courant peuvent préférentiellement être réalisés par une étape de découpe ou poinçonnage, puis par une étape de cintrage ou de pliage. Le câblage interne de la pièce d'assemblage et de connexion électrique peut être soudé au(x) collecteur(s) de courant une fois ceux-ci mis en place dans les deux demi-parties.

Les axes de raccordement peuvent être réalisés par extrusion lorsqu'ils ont une section circulaire. Pour toute autre section, ils peuvent être par exemple usinés ou moulés.

Par ailleurs, la cellule de stockage d'énergie électrique peut être réalisée à partir d'un bobineau ou d'un stack. Le bobineau est un coeur électrochimique réalisé par enroulement d'une double électrode positive, d'un séparateur et d'une double électrode négative superposés. Le stack est un coeur électrochimique réalisé par empilement d'une double électrode positive, d'un séparateur et d'une double électrode négative.

En particulier, pour les cellules de géométrie d'architecture prismatique, on peut utiliser un coeur électrochimique réalisé par enroulement (bobineau) ou par empilement (stack). A ce coeur électrochimique, on peut fixer un ou plusieurs collecteurs de courant sur chaque rive. Il peut y avoir un collecteur de courant pour chaque borne ou un seul pour deux bornes d'un même pôle. Le ou les collecteurs de courant peuvent être constitués d'une forme cylindrique creuse s'adaptant à l'axe de raccordement selon un montage serré, ainsi que d'une languette que l'on replie sur la rive du coeur électrochimique afin de maintenir le contact électrique. Les formes cylindriques creuses peuvent être positionnées de part et d'autre de la cellule sur sa tranche.

En outre, pour les cellules de géométrie d'architecture cylindrique, on peut utiliser un coeur électrochimique par enroulement (bobineau). De chaque côté du coeur électrochimique, sur les rives, on peut souder un collecteur de courant constitué de trois parties. Une partie a la forme d'un disque plat sur laquelle sont soudées les rives, les formes des deux autres parties s'adaptant aux axes de raccordement. Cette solution permet uniquement un montage en série des cellules. Une variante permettant un montage en série ou en parallèle des cellules peut consister à souder sur les rives de chaque côté, un collecteur de courant constitué de deux parties, une en forme de disque plat sur laquelle sont soudées les rives et une autre à la forme des axes de raccordement, une reprise de courant par une pièce conductrice permettant de relier le collecteur de courant à une borne sur la face opposée.

Les mêmes matériaux que ceux du revêtement de la pièce d'assemblage et de connexion peuvent être utilisés pour le revêtement des cellules. On peut alors surmouler par injection sous vide directement sur les autres éléments de la cellule et la remplir d'électrolyte, si nécessaire car ce n'est en effet pas le cas pour des condensateurs céramiques et diélectriques. Le revêtement ou la partie du revêtement qui est en contact avec l'électrolyte peut être réalisée dans un matériau chimiquement stable vis-à-vis de l'électrolyte. On peut ainsi réaliser un revêtement en aluminium par exemple en soudant les différentes pièces, à condition de les isoler de toute pièce traversée par un courant électrique (notamment rives, collecteurs de courant, bornes, entre autres).

Les caractéristiques énoncées dans la présente description peuvent être prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- les figures 1A et 1B représentent, en perspective, deux exemples de réalisation de cellules de stockage d'énergie électrique 1 conformes à l'invention, de géométrie d'architecture prismatique,
- les figures 2A et 2B représentent, en perspective, deux exemples de réalisation de cellules de stockage d'énergie électrique 1 conformes à l'invention, de géométrie d'architecture cylindrique,
- les figures 3A et 3B représentent respectivement, en perspective, un premier exemple de collecteur de courant et un axe de raccordement sur lequel est placé un tel collecteur de courant,
- les figures 4A et 4B représentent respectivement, en perspective, un deuxième exemple de collecteur de courant et un axe de raccordement sur lequel est placé un tel collecteur de courant,
- les figures 5A et 5B représentent, respectivement en coupe et en perspective, une illustration des positions que peuvent occuper deux cellules de stockage d'énergie électrique selon l'invention de géométrie prismatique l'une par rapport à l'autre par rotation autour d'axes de raccordement,
- les figures 6A et 6B représentent, respectivement en coupe et en perspective, une illustration des positions que peuvent occuper deux cellules de stockage d'énergie électrique selon l'invention de géométrie cylindrique l'une par rapport à l'autre par rotation autour d'axes de raccordement,
- la figure 7 représente, en perspective, un premier exemple de pièce d'assemblage et de connexion électrique conforme à l'invention pour une cellule de stockage d'énergie électrique de géométrie cylindrique,
- les figures 8A et 8B représentent, respectivement en coupe et en perspective, une illustration des positions que peuvent occuper deux cellules de stockage d'énergie électrique selon l'invention, de géométrie cylindrique, l'une par rapport à l'autre par rotation autour d'axes de raccordement 4, avec utilisation d'une pièce d'assemblage et de connexion électrique telle représentée sur la figure 7,
- les figures 9A, 9B et 9C représentent, en perspective, un deuxième exemple de pièce d'assemblage et de connexion électrique selon l'invention pour une cellule de stockage d'énergie électrique de géométrie cylindrique, les figures 9B et 9C représentant respectivement la pièce avec ouverture partielle selon deux configurations différentes en rotation,
- les figures 10A et 10B représentent, respectivement en coupe et en perspective, une illustration des positions que peuvent occuper deux cellules de stockage d'énergie électrique de géométrie cylindrique l'une par rapport à l'autre par rotation autour d'axes de raccordement, avec utilisation d'une pièce d'assemblage et de connexion électrique telle que représentée sur les figures 9A, 9B et 9C,
- la figure 11 représente, en perspective, un exemple d'assemblage ou module électrique d'assemblage conforme à l'invention de plusieurs cellules de stockage d'énergie électrique raccordées entre elles par plusieurs pièces d'assemblage et de connexion électrique,
- les figures 12A, 12B et 12C représentent, en perspective, un exemple de pièce d'assemblage et de connexion électrique conforme à l'invention pour une cellule de stockage d'énergie électrique de géométrie d'architecture prismatique, les figures 12B et 12C représentant respectivement la pièce avec ouverture partielle,
- les figures 13A et 13B représentent, en perspective et respectivement en configuration assemblée et avec ouverture partielle, un exemple de pièce d'assemblage et de connexion électrique semblable à celui des figures 9A, 9B et 9C avec présence d'un système d'accroche,
- les figures 14A et 14B représentent, en perspective, deux autres exemples de modules électriques d'assemblage conformes à l'invention, comportant une pluralité de cellules de stockage d'énergie électrique de géométrie d'architecture prismatique assemblées entre elles par une pluralité de pièces d'assemblage et de connexion électrique,
- la figure 15 représente, en perspective, un exemple de module électrique d'assemblage comportant une pluralité de cellules de stockage d'énergie électrique et une pluralité de systèmes de refroidissement disposés dans les espaces interstitiels entre les cellules,
- la figure 16 représente, en perspective, un exemple de pièce d'assemblage et de connexion électrique comportant des systèmes électroniques embarqués,
- la figure 17 représente, en perspective, un exemple de pièce d'assemblage et de connexion électrique permettant uniquement un montage en série de cellules de stockage d'énergie électrique,
- la figure 18A représente, en perspective, un exemple de pièce d'assemblage et de connexion électrique permettant uniquement un montage en parallèle de cellules de stockage d'énergie électrique,
- la figure 18B représente, en perspective, un autre exemple de pièce d'assemblage et de connexion électrique permettant uniquement un montage en série de cellules de stockage d'énergie électrique,
- les figures 19A et 19B représentent, en perspective, l'assemblage et la connexion électrique entre une cellule de stockage électrique et une pièce d'assemblage et de connexion électrique par l'intermédiaire d'un axe de raccordement, respectivement en vue pleine et en vue en transparence,
- les figures 20A et 20B représentent, en perspective, une autre variante d'assemblage et de connexion électrique entre une cellule de stockage d'énergie électrique et une pièce d'assemblage et de connexion électrique par l'intermédiaire d'un axe de raccordement, respectivement en vue pleine et en vue en transparence,
- les figures 21A et 21B représentent, en perspective, un autre exemple d'assemblage et de connexion électrique entre une cellule de stockage d'énergie électrique et une pièce d'assemblage et de connexion électrique par l'intermédiaire d'un axe de raccordement comportant une partie enrobée d'un matériau isolant avec détrompeur, respectivement en vue de dessus et en vue de dessous, et
- la figure 22 représente l'exemple des figures 21A et 21B en transparence.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans tous les exemples décrits ci-après, les cellules de stockage d'énergie électrique 1 sont des cellules électrochimiques élémentaires 1, destinées à former des générateurs électrochimiques. Néanmoins, comme il a été indiqué précédemment, les cellules de stockage d'énergie électrique peuvent être d'un autre type, permettant par exemple la formation de condensateurs et/ou de supercondensateurs électrochimiques ou diélectriques.

De plus, chaque cellule électrochimique élémentaire 1 comporte un coeur électrochimique, comportant une électrode négative, une électrode positive et un électrolyte entre les électrodes négative et positive, de sorte à permettre la réalisation d'une réaction électrochimique.

Chaque cellule électrochimique élémentaire 1 peut être réalisée à partir d'un bobineau ou d'un stack. Le bobineau est un coeur électrochimique réalisé par enroulement d'une double électrode positive, d'un séparateur et d'une double électrode négative superposés. Le stack est un coeur électrochimique réalisé par empilement d'une double électrode positive, d'un séparateur et d'une double électrode négative.

Enfin, les cellules électrochimiques élémentaires 1 présentées ici sont de géométrie prismatique ou cylindrique. Bien entendu, l'invention ne se limite pas à une géométrie prismatique ou cylindrique des cellules 1, qui peuvent ainsi présenter tout type de géométrie d'architecture.

Les cellules électrochimiques élémentaires 1 sont notamment destinées à être intégrées dans un module électrochimique d'assemblage 20 d'un système de stockage d'énergie.

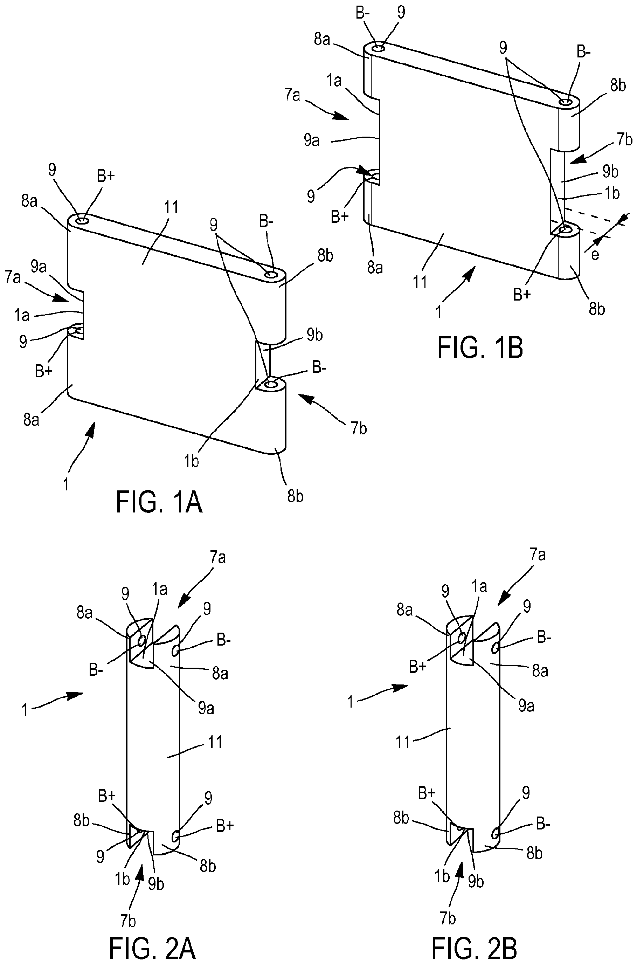

On a représenté sur les figures 1A et 1B, en perspective, de façon schématique et partielle, deux premiers exemples de réalisation de cellules de stockage d'énergie électrique 1 conformes à l'invention, du type cellules électrochimiques élémentaires 1.

Sur ces figures 1A et 1B, les cellules électrochimiques élémentaires 1 sont de géométrie d'architecture prismatique.

L'assemblage mécanique et la connexion électrique de telles cellules électrochimiques élémentaires 1 entre elles sont réalisés par l'intermédiaire de pièces d'assemblage et de connexion électrique 2 à l'aide d'axes de raccordement 4, comme décrits par la suite, permettant la modularité des cellules 1.

Chaque cellule 1 comporte, sur une première face la, un premier moyen de réception 7a d'une première pièce d'assemblage et de connexion électrique 2 (non représentée) et, sur une deuxième face 1b, opposée à la première face la (les première la et deuxième 1b faces étant situées dans l'épaisseur e de la cellule 1), un deuxième moyen de réception 7b d'une deuxième pièce d'assemblage et de connexion électrique 2 (non représentée).

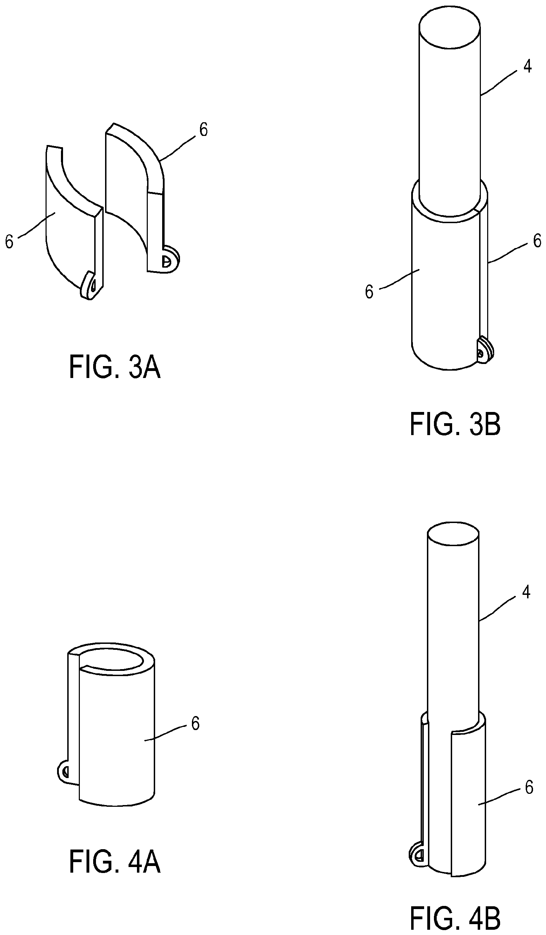

Chacun des premier 7a et deuxième 7b moyens de réception est par ailleurs configuré pour permettre le passage d'un axe de raccordement 4 (visible notamment sur les figures 3B et 4B) de façon à permettre respectivement l'assemblage et la connexion électrique des première et deuxième pièces d'assemblage et de connexion électrique 2 avec la cellule de stockage d'énergie électrique 1. Cet axe de raccordement 4 peut par exemple être un fusible intercellule.

Plus précisément, la première face la de la cellule 1 comporte deux portions de cellule 8a s'étendant en relief depuis la première face la et définissant entre elles un premier logement 9a pour recevoir la première pièce d'assemblage et de connexion électrique 2. De même, la deuxième face 1b de la cellule 1 comporte deux portions de cellule 8b s'étendant en relief depuis la deuxième face 1b et définissant entre elles un deuxième logement 9b pour recevoir la deuxième pièce d'assemblage et de connexion électrique 2.

Par ailleurs, chaque portion de cellule 8a, 8b en relief comporte un trou 9 permettant le passage d'un axe de raccordement 4 pour l'assemblage et la connexion électrique de la cellule 1 avec une pièce d'assemblage et de connexion électrique 2.

Sur l'exemple de la figure 1A, la cellule 1 est prévue pour permettre un montage uniquement en série avec une pièce d'assemblage et de connexion électrique 2 et une autre cellule 1 du même type. Ainsi, les deux portions de cellule 8a de la première face la constituent deux bornes de même polarité, par exemple positive B+. De même, les deux portions de cellule 8b de la deuxième face 1b constituent deux bornes de même polarité, par exemple négative B-, opposée à la polarité positive B+ des deux portions de cellule 8a de la première face la.

Sur l'exemple de la figure 1B, la cellule 1 est prévue pour permettre un montage en parallèle et en série avec une pièce d'assemblage et de connexion électrique 2 et une autre cellule 1 du même type. Ainsi, les deux portions de cellule 8a de la première face la constituent respectivement une borne de polarité positive B+ et une borne de polarité négative B-. De même, les deux portions de cellule 8b de la deuxième face 1b constituent respectivement une borne de polarité positive B+ et une borne de polarité négative B-, les bornes de polarité positive B+ étant situées d'un même côté de la cellule 1 (en bas) et les bornes de polarité négative B- étant situées d'un même autre côté de la cellule 1 (en haut).

On a par ailleurs représenté sur les figures 2A et 2B, en perspective, de façon schématique et partielle, deux deuxièmes exemples de réalisation de cellules de stockage d'énergie électrique 1 conformes à l'invention, du type cellules électrochimiques élémentaires 1.

Sur ces figures 2A et 2B, les cellules électrochimiques élémentaires 1 sont de géométrie d'architecture cylindrique.

Comme décrit précédemment pour les figures 1A et 1B, chaque cellule 1 comporte, sur une première face la, un premier moyen de réception 7a d'une première pièce d'assemblage et de connexion électrique 2 (non représentée) et, sur une deuxième face 1b, opposée à la première face la (les première la et deuxième 2a faces étant situées dans l'épaisseur e de la cellule 1), un deuxième moyen de réception 7b d'une deuxième pièce d'assemblage et de connexion électrique 2 (non représentée). Les premier 7a et deuxième 7b moyens de réception comportent respectivement deux portions de cellule 8a et deux portions de cellules 8b définissant respectivement entre elles des premier 9a et deuxième 9b logements.

Sur l'exemple de la figure 2A, la cellule 1 est prévue pour permettre un montage uniquement en série avec une pièce d'assemblage et de connexion électrique 2 et une autre cellule 1 du même type. Ainsi, les deux portions de cellule 8a de la première face la constituent deux bornes de même polarité, par exemple négative B-. De même, les deux portions de cellule 8b de la deuxième face 1b constituent deux bornes de même polarité, par exemple positive B+, opposée à la polarité négative B- des deux portions de cellule 8a de la première face la.

Sur l'exemple de la figure 2B, la cellule 1 est prévue pour permettre un montage en parallèle et en série avec une pièce d'assemblage et de connexion électrique 2 et une autre cellule 1 du même type. Ainsi, les deux portions de cellule 8a de la première face la constituent respectivement une borne de polarité positive B+ et une borne de polarité négative B-. De même, les deux portions de cellule 8b de la deuxième face 1b constituent respectivement une borne de polarité positive B+ et une borne de polarité négative B-, les bornes de polarité positive B+ étant situées d'un même côté de la cellule 1 (à gauche) et les bornes de polarité négative B- étant situées d'un même autre côté de la cellule 1 (à droite).

Par ailleurs, sur chacun des exemples des figures 1A, 1B et des figures 2A, 2B, les bornes positives B+ ou négatives B- sont masquées par le revêtement 11 (ou « packaging » en anglais), et ainsi uniquement accessibles par l'intermédiaire des trous 9 qui permettent le passage des axes de raccordement 4.

Les trous 9 peuvent être de faible diamètre. De plus, les trous des deux portions de cellule 8a ou 8b situées sur une même face la ou 1b de la cellule 1 sont avantageusement débouchants et coaxiaux.

Conformément à l'invention, les cellules électrochimiques élémentaires 1 décrites en référence aux figures 1A et 1B, pour les cellules 1 de géométrie d'architecture prismatique, et en référence aux figures 2A et 2B, pour les cellules 1 de géométrie d'architecture cylindrique, peuvent être assemblées et connectées électriquement entre elles par l'intermédiaire de pièces d'assemblage et de connexion électrique 2 telles que décrites dans la suite de la description, à l'aide d'axes de raccordement 4 venant se positionner entre les cellules 1 et les pièces 2.

Avantageusement, les axes de raccordement 4, montés entre les cellules 1 et les pièces 2, peuvent permettre la rotation, de l'une par rapport à l'autre, entre une cellule 1 et la pièce 2 qui lui est raccordée, ou en particulier entre deux cellules 1 raccordées entre elles par une même pièce 2. Autrement dit, les axes de raccordement 4 peuvent être avantageusement montés en rotation sur les cellules 1 et les pièces 2.

Les axes de raccordement 4 peuvent se présenter sous la forme de tiges cylindriques. Les « pions » d'assemblage pivot peuvent être constitués de billes poussées par des ressorts pour en faciliter l'assemblage et permettre le contact électrique et conserver la mobilité voulue.

Pour permettre le montage en rotation d'un axe de raccordement 4 sur une cellule de stockage d'énergie électrique 1 et/ou sur une pièce d'assemblage et de connexion électrique 2, l'axe de raccordement 4 peut être monté dans la cellule 1 et/ou la pièce 2 de façon suffisamment serrée pour permettre une bonne surface de contact tout en permettant la rotation. Pour une fixation indémontable, l'axe de raccordement 4 peut avoir au moins une partie montée en force dans la cellule 1 et/ou dans la pièce 2.

Le montage des axes de raccordement 4 entre les cellules 1 et les pièces 2 peut préférentiellement être réalisé à la chaîne, notamment de façon automatique par un robot, voire encore par un opérateur.

La rotation des axes de raccordement 4 dans les cellules 1 et/ou les pièces 2 peut être assurée par l'intermédiaire d'éléments situés dans les cellules 1 et/ou les pièces 2 épousant au moins partiellement la forme des axes de raccordement 4. Ces éléments peuvent notamment être constitués par des collecteurs de courant 6, négatifs ou positifs, qui assurent également la connexion électrique entre les cellules 1 et les pièces 2.

On a ainsi représenté respectivement sur les figures 3A et 3B, en perspective, un exemple de collecteur de courant 6 constitué de deux moitiés demi-cylindriques et un axe de raccordement 4 sur lequel est placé ce collecteur de courant 6.

Les deux moitiés du collecteur de courant 6, en forme de demi-cercle en section, permettent d'assurer la rotation de l'axe de raccordement 4 par rapport à une cellule 1 et/ou une pièce 2 sur lesquelles il est monté.

L'assemblage et les dimensions des deux moitiés du collecteur de courant 6 peuvent être déterminés de telle sorte qu'elles puissent se déformer pour accueillir l'axe de raccordement 4 tout en ayant un retour élastique permettant le maintien du contact avec l'axe de raccordement 4.

On a par ailleurs représenté respectivement sur les figures 4A et 4B, en perspective, un autre exemple de collecteur de courant 6 de forme sensiblement entièrement cylindrique et un axe de raccordement 4 sur lequel est placé ce collecteur de courant 6.

Le collecteur de courant 6 peut présenter une forme de cylindre ouvert. Ses dimensions peuvent être déterminées de sorte que le collecteur de courant 6 puisse se déformer pour accueillir l'axe de raccordement 4 tout en ayant un retour élastique permettant le maintien du contact avec l'axe de raccordement 4.

Dans les exemples des figures 3A, 3B et 4A, 4B, les axes de raccordement 4 peuvent comporter des extrémités arrondies pour faciliter leur insertion dans les collecteurs de courant 6.

Pour un assemblage indémontable, les axes de raccordement 4 peuvent avoir au moins une partie montée en force dans la cellule 1 et/ou dans la pièce 2, comme indiqué précédemment. Le montage en force peut se faire par exemple par emmanchement forcé (par exemple, à la presse ou au maillet) ou encore par frettage (dilatation thermique). Pour ce faire, les collecteurs de courant 6 peuvent présenter une rigidité suffisante pour supporter le montage en force.

De façon avantageuse, l'utilisation de la pièce d'assemblage et de connexion électrique 2 selon l'invention entre deux cellules électrochimiques élémentaires 1 selon l'invention apporte une modularité importante au montage du fait de la rotation possible à 360° d'une cellule 1 par rapport à une autre cellule 1. De cette façon, la possible rotation entre cellules 1 peut permettre à un module électrique d'assemblage 10 de telles cellules 1 de prendre de très nombreuses formes, par exemple pour épouser la forme d'une carrosserie de voiture, et permettre une mise en module 10 et/ou en pack batterie facilitée.

La rotation à 360° d'une cellule 1 par rapport à une autre cellule 1, et donc la modularité de l'assemblage, est en particulier permise par le positionnement parallèle des axes de raccordement 4 dans la pièce d'assemblage et de connexion 2. Ainsi, la distance entre les axes de raccordement 4 est préférentiellement supérieure ou égale à l'épaisseur e des cellules 1, préférentiellement toutes du même type.

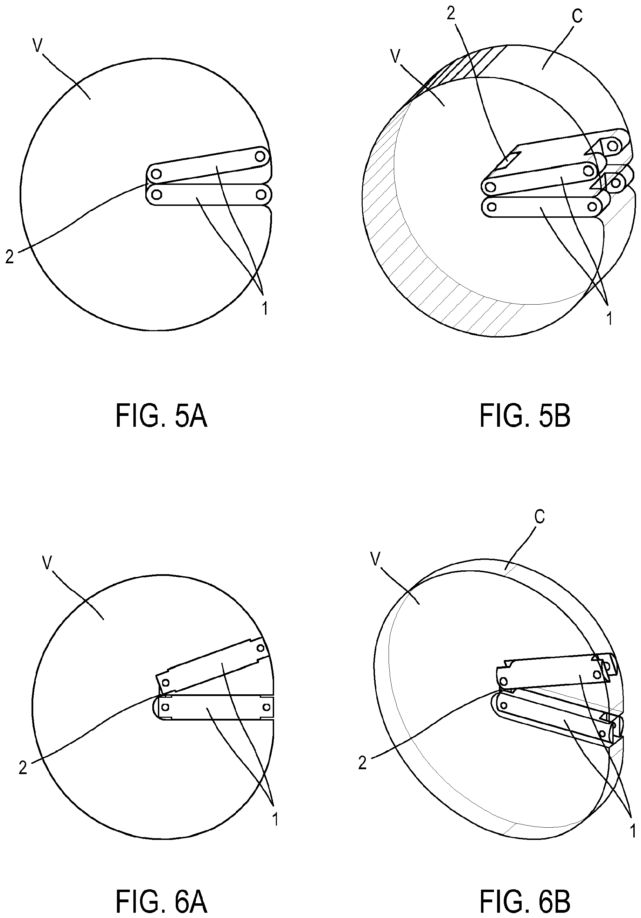

On a ainsi représenté sur les figures 5A et 5B, respectivement en coupe et en perspective, une illustration des positions que peuvent occuper deux cellules 1 de géométrie prismatique l'une par rapport à l'autre par rotation autour des axes de raccordement 4.

On a par ailleurs représenté sur les figures 6A et 6B, respectivement en coupe et en perspective, une illustration des positions que peuvent occuper deux cellules 1 de géométrie cylindrique l'une par rapport à l'autre par rotation autour des axes de raccordement 4.

On constate alors qu'une cellule 1 peut prendre toutes les positions comprises dans une sorte de cylindre C de volume V, dont le centre est au milieu de l'entraxe de la pièce d'assemblage et de connexion électrique 2.

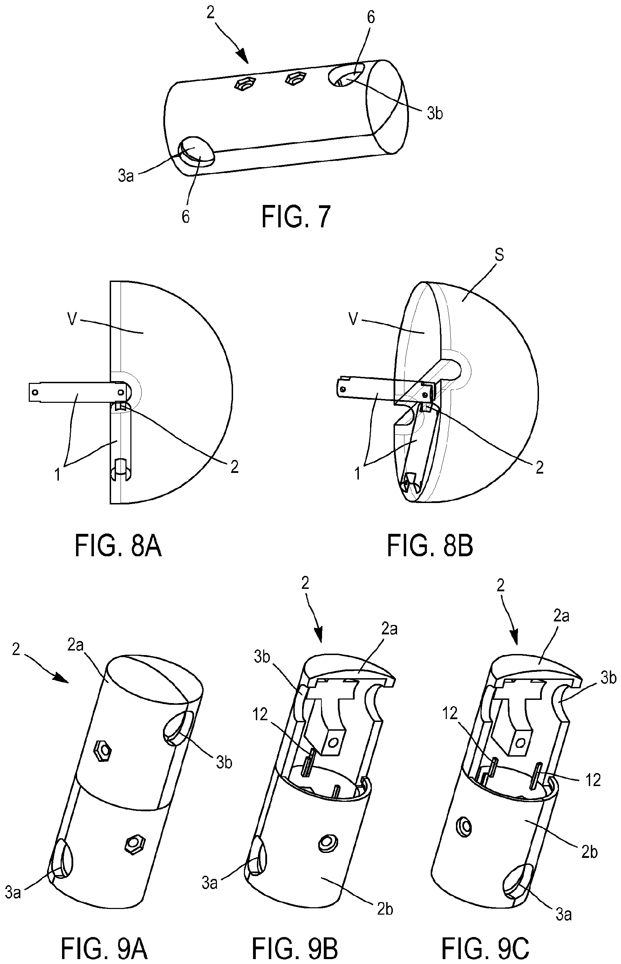

On va maintenant décrire en référence aux figures 7 à 10B des exemples de réalisation particuliers de pièces d'assemblage et de connexion électrique 2 conformes à l'invention, pouvant être utilisées pour l'assemblage et la connexion électrique entre deux cellules électrochimiques élémentaires 1 de géométrie d'architecture cylindrique.

La figure 7 représente, en perspective, un premier exemple de pièce d'assemblage et de connexion électrique 2 selon l'invention pour une cellule 1 de géométrie cylindrique.

Conformément à l'invention, la pièce 2 comporte des premier 3a et deuxième 3b moyens de raccordement de la pièce 2 respectivement à deux cellules 1 qu'elle est destinée à raccorder ensemble. Ces premier 3a et deuxième 3b moyens de raccordement sont configurés pour permettre le passage d'axes de raccordement 4 pour l'assemblage et la connexion électrique entre la pièce 2 et les cellules 1.

Plus particulièrement, les premier 3a et deuxième 3b moyens de raccordement comportent respectivement des premier 5a et deuxième 5b logements aptes à être traversés par des axes de raccordement 4 pour l'assemblage et la connexion électrique de la pièce 2 avec chacune des cellules 1.

Par ailleurs, chacun des premier 5a et deuxième 5b logements comportent un collecteur de courant 6 négatif ou positif sous forme cylindrique, destiné à épouser au moins partiellement la forme d'un axe de raccordement 4.

De plus, dans ce premier exemple de réalisation de la pièce 2 pour cellule 1 de géométrie cylindrique, les premier 5a et deuxième 5b logements sont formés dans la pièce 2 de façon sensiblement orthogonale. Autrement dit, les axes de raccordement 4 qui traversent les premier 5a et deuxième 5b logements sont sensiblement orthogonaux entre eux.

On a représenté sur les figures 8A et 8B, respectivement en coupe et en perspective, une illustration des positions que peuvent occuper deux cellules 1 de géométrie cylindrique l'une par rapport à l'autre par rotation autour des axes de raccordement 4, avec l'utilisation d'une pièce 2 telle que celle représentée sur la figure 7.

De par la possibilité d'avoir des axes de raccordement 4 sensiblement orthogonaux entre eux, une première cellule 1 peut ainsi prendre toutes les positions comprises dans une sorte de demi-sphère S de volume V, dont le plan de base est situé à l'extrémité d'une deuxième cellule 1 à laquelle la première cellule 1 est connectée.

Les figures 9A, 9B et 9C représentent, en perspective, un deuxième exemple de pièce d'assemblage et de connexion électrique 2 selon l'invention pour une cellule 1 de géométrie cylindrique. Plus précisément, la figure 9A représente la pièce 2 dans une configuration assemblée, et les figures 9B et 9C représentent respectivement la pièce 2 avec ouverture partielle selon deux configurations différentes en rotation.

Selon cette deuxième variante de réalisation d'une pièce 2 pour une cellule 1 de géométrie cylindrique, la pièce 2 est divisée en au moins deux parties 2a et 2b, notamment au niveau central de la pièce 2, ces deux parties 2a et 2b étant aptes à être entraînées en rotation l'une par rapport à l'autre.

Toutefois, afin d'éviter notamment toute dégradation du câblage interne de la pièce 2, la rotation d'une partie 2a par rapport à l'autre partie 2b est limitée à 180° par utilisation préférentielle d'un système d'arrêt en rotation 12, notamment des ergots 12.

A ce titre, la comparaison des figures 9B et 9C montre le principe d'arrêt en rotation des deux parties 2a et 2b l'une par rapport à l'autre par l'utilisation des ergots 12.

La possible rotation entre les deux parties 2a et 2b de la pièce d'assemblage et de connexion électrique 2 selon l'invention, toutefois limitée à 180° par la présence d'ergots 9, permet à une première cellule 1 de prendre toutes les positions comprises dans une sorte de sphère S de volume V, dont le centre est situé au milieu de l'axe de raccordement 4 connectant la deuxième cellule 1 à la pièce 2.

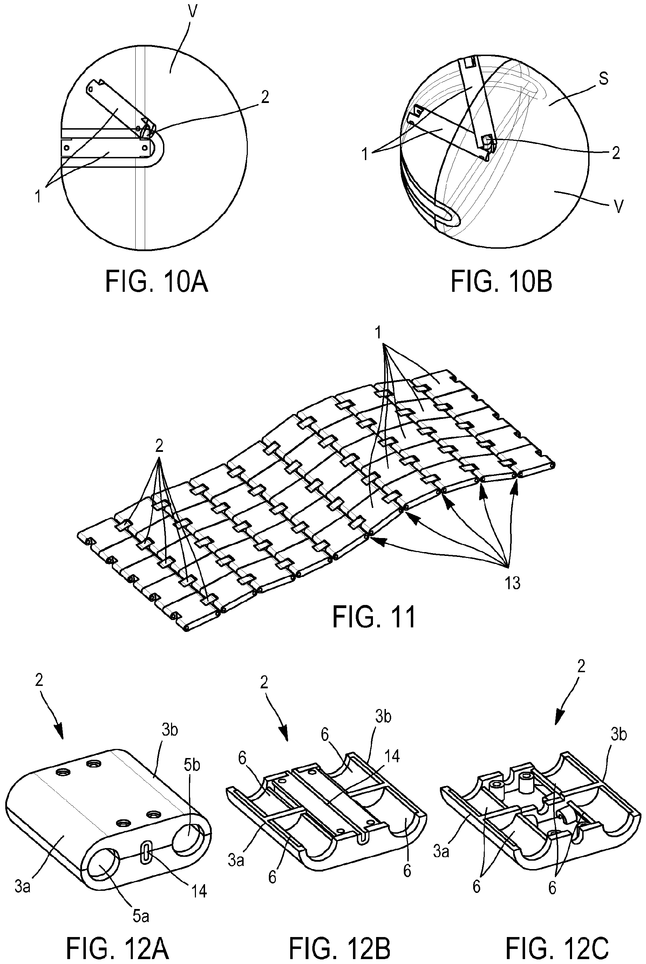

Cette possibilité est ainsi illustrée sur les figures 10A et 10B qui représentent, respectivement en coupe et en perspective, une illustration des positions que peuvent occuper deux cellules 1 de géométrie cylindrique l'une par rapport à l'autre par rotation autour des axes de raccordement 4, avec l'utilisation d'une pièce 2 telle que celle représentée sur les figures 9A, 9B et 9C.

On a par ailleurs représenté sur la figure 11, en perspective, un exemple d'assemblage ou module électrique d'assemblage 20 conforme à l'invention de plusieurs cellules électrochimiques élémentaires 1 raccordées entre elles par plusieurs pièces d'assemblage et de connexion électrique 2.

Cet exemple illustre en particulier la possibilité pour l'assemblage 20 de comporter des moyens de maintien en position 13. En effet, dans le cas particulier où les cellules 1 sont destinées à épouser des formes tridimensionnelles, le maintien en position des cellules 1 au sein de l'assemblage 20 peut être nécessaire et assuré par l'utilisation des moyens de maintien en position 13. Ces moyens de maintien en position 13 comportent par exemple des fils, des câbles (cas de l'exemple de la figure 11) et/ou un ou plusieurs autres assemblages 20 du même type. Ces moyens de maintien en position 13 peuvent être entrecroisés perpendiculairement entre eux, de façon semblable aux fils de trame dans les méthodes classiques de tissage.

On a par ailleurs représenté sur les figures 12A, 12B et 12C, en perspective, un autre exemple de pièce d'assemblage et de connexion électrique 2 conforme à l'invention pour une cellule 1 de géométrie d'architecture prismatique, les figures 12B et 12C représentant respectivement la pièce 2 avec ouverture partielle.

Comme indiqué précédemment, la pièce 2 comporte des premier 3a et deuxième 3b moyens de raccordement de la pièce 2 respectivement à deux cellules 1 qu'elle est destinée à raccorder ensemble. Ces premier 3a et deuxième 3b moyens de raccordement sont configurés pour permettre le passage d'axes de raccordement 4 pour l'assemblage et la connexion électrique entre la pièce 2 et les cellules 1.

Plus particulièrement, les premier 3a et deuxième 3b moyens de raccordement comportent respectivement des premier 5a et deuxième 5b logements aptes à être traversés par des axes de raccordement 4 pour l'assemblage et la connexion électrique de la pièce 2 avec chacune des cellules 1.

Par ailleurs, chacun des premier 5a et deuxième 5b logements comportent deux collecteurs de courant 6 négatif ou positif sous forme cylindrique, destiné à épouser au moins partiellement la forme d'un axe de raccordement 4.

Lorsque cette pièce 2 est utilisée dans un assemblage 20 pourvu de moyens de maintien en position 13 tels que décrits précédemment, il peut être utile de prévoir un système d'accroche 14 des moyens de maintien en position 13 sur la pièce 2, afin d'éviter toute dégradation des différents assemblages.

Les figures 12A et 12B représentent la présence d'un tel système d'accroche 14 sur la pièce 2, la figure 12C représentant la pièce 2 en l'absence de ce système d'accroche 14.

Le système d'accroche 14 peut par exemple permettre l'accroche du fil ou câble 13 permettant le maintien en position de cellules 1. Pour éviter de rigidifier l'assemblage des cellules 1 d'un côté du module 20, le système d'accroche 14 peut préférentiellement être réalisé par un trou réalisé de part en part à mi-distance des deux axes de raccordement 4 logés dans les premier 5a et deuxième 5b logements de la pièce 2, et au centre de la pièce 2.

En variante, il serait également possible de réaliser le système d'accroche 14 sur les deux faces de la pièce 2, puis à entrecroiser les moyens de maintien en position 13.

L'utilisation du système d'accroche 14 peut aussi nécessiter d'augmenter la longueur de la pièce d'assemblage et de connexion électrique 2.

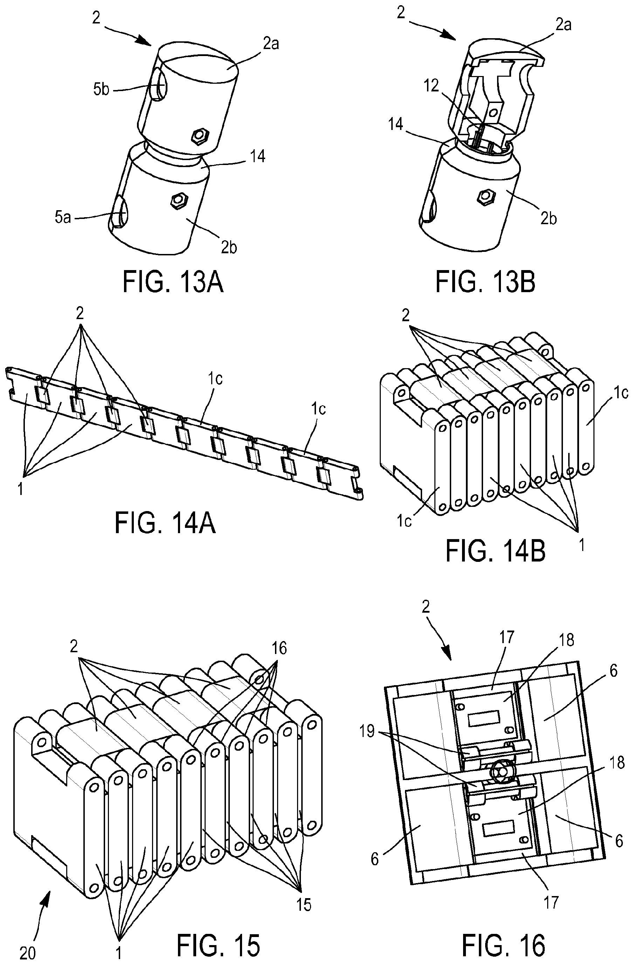

Les figures 13A et 13B représentent, en perspective et respectivement en configuration assemblée et avec ouverture partielle, un exemple de pièce d'assemblage et de connexion électrique 2 semblable à celui des figures 9A, 9B et 9C avec présence d'un système d'accroche 14.

En effet, pour cette variante de pièce 2 pour une cellule 1 de géométrie cylindrique, le système d'accroche 14 tel que décrit en référence aux figures 12A, 12B et 12C n'est pas adapté. De la sorte, la pièce 2 peut comporter un système d'accroche 14 sous la forme d'une gorge 14 située au milieu de la pièce 2 (au niveau de la rotation) pour donner une position préférentielle et ainsi faciliter l'entrecroisement dans l'assemblage de cellules 1.

On a en outre représenté, en perspective, sur les figures 14A et 14B deux autres exemples de modules électriques d'assemblage 20 conformes à l'invention, comportant une pluralité de cellules 1 de géométrie prismatique assemblées entre elles par une pluralité de pièces d'assemblage et de connexion électrique 2.

Pour de tels modules d'assemblage 20, la gestion de la thermique peut être préférentiellement effectuée par un système de refroidissement 15 situé aux faces 1c non connectées des cellules 1. Toutefois, d'autres montages peuvent être utilisés, et notamment l'utilisation de l'espace interstitiel pour les cellules 1 de géométrie cylindrique.

Pour les cellules 1 de géométrie prismatique, l'augmentation de la longueur de la pièce 2 peut permettre de créer un espace interstitiel 16 entre les cellules 1. Le système de refroidissement 15 peut ainsi par exemple être situé dans cet espace interstitiel 16. Le système de refroidissement 15 peut par exemple correspondre à une plaque froide, un système de caloduc, un système par fluide caloporteur, une entretoise isolante électrique et/ou un système par conduction thermique.

La figure 15 représente ainsi, en perspective, un exemple de module d'assemblage 20 comportant une pluralité de cellules 1 et une pluralité de systèmes de refroidissement 15 disposés dans les espaces interstitiels 16 entre les cellules 1.

Par ailleurs, les dimensions de la pièce d'assemblage et de connexion 2 étant dépendantes de celles des cellules électrochimiques 1, il est possible d'avoir une ou plusieurs parties creuses 17 dans la pièce 2 qui peuvent être mises à profit pour l'intégration d'un ou plusieurs systèmes électroniques embarqués 18 et d'un câblage interne 19.

A ce titre, la figure 16 représente, en perspective, un exemple de pièce d'assemblage et de connexion électrique 2 comportant des systèmes électroniques embarqués 18.

Les systèmes électroniques embarqués 18 peuvent par exemple comporter des capteurs, un système de sécurité et/ou un dispositif de communication avec une électronique de contrôle du type BMS.

Dans le cas où les cellules 1 ne sont pas mises en module et/ou pack, on peut utiliser une pièce terminale possédant le même système de bornes que les cellules 1 et intégrant tous les systèmes de gestion des cellules 1.

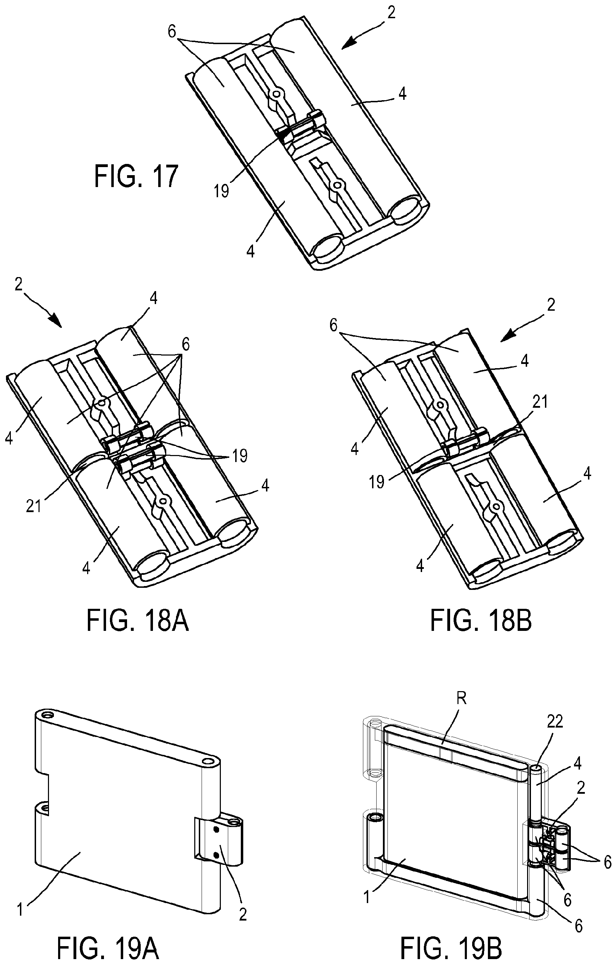

Par ailleurs, les figures 17, 18A et 18B représentent la possibilité d'avoir différentes variantes de pièce d'assemblage et de connexion électrique 2, certaines ne permettant qu'un montage en série des cellules 1 (figure 17) et d'autres ne permettant qu'un montage en parallèle des cellules 1 (figure 18A).

Plus spécifiquement, la figure 17 représente, en perspective, un exemple de pièce d'assemblage et de connexion électrique 2 permettant uniquement un montage en série de cellules 1.

Dans cette première variante, les deux bornes B+ ou B- d'une même face la ou 1b de la cellule 1 sont au même pôle (cas de la figure 1A décrite précédemment). Avec cette architecture, les cellules 1 ne peuvent être connectées qu'uniquement en série, mais pour une plus grande intensité. Dans ce cas, un seul axe de raccordement 4 est nécessaire entre une cellule 1 et une pièce 2. Cet axe de raccordement 4 traverse la pièce 2 et les deux connectiques de la cellule 1.

Par ailleurs, les figures 18A et 18B représentent, en perspective, un exemple de pièce d'assemblage et de connexion électrique 2 permettant respectivement uniquement un montage en parallèle et uniquement un montage en série de cellules 1.

Dans cette deuxième variante, les deux bornes B+ ou B- d'une même face la ou 1b de la cellule 1 sont chacune à un pôle opposé (cas de la figure 1B décrite précédemment). Dans ce cas, on utilise un axe de raccordement 4 par borne B+ ou B- et la pièce 2 possède une partie centrale 21 isolant les deux axes 4 et donc les deux pôles. Pour cette variante, on peut réaliser deux câblage internes 19 de part et d'autre de la partie centrale 21 pour permettre un montage des cellules 1 uniquement en parallèle.

De plus, la figure 18B représente, en perspective, un autre exemple de pièce d'assemblage et de connexion électrique 2 permettant uniquement un montage en série de cellules 1.

Tout comme pour l'exemple de la figure 18A, les deux bornes B+ ou B- d'une même face la ou 1b de la cellule 1 sont chacune à un pôle opposé (cas de la figure 1B décrite précédemment). On utilise également un axe de raccordement 4 par borne B+ ou B- et la pièce 2 possède une partie centrale 21 isolant les deux axes 4 et donc les deux pôles. Pour cette variante, on peut réaliser un seul câblage interne 19 d'un côté de la partie centrale 21 pour permettre un montage des cellules 1 uniquement en série.

Les figures 19A et 19B représentent en outre, en perspective, l'assemblage et la connexion électrique entre une cellule 1 et une pièce 2 par l'intermédiaire d'un axe de raccordement 4, respectivement en vue pleine et en vue en transparence.

Pour la sécurité des opérateurs, l'assemblage des différents éléments entre eux est préférentiellement réalisé de façon à éviter tout contact entre l'opérateur et l'axe de raccordement 4. L'assemblage est donc préférentiellement réalisé à l'aide d'un robot. La longueur de l'axe de raccordement 4 est telle qu'une fois mis en place, il n'affleure pas ni ne dépasse de la surface de la cellule 1. Le trou alors restant est ensuite bouché à l'aide d'un bouchon isolant 22 en un matériau isolant électrique, comme représenté sur la figure 19B, à proximité de la rive R. Ainsi, pour la sécurité des opérateurs, l'axe de raccordement 4 peut, après mise en place entre la cellule 1 et la pièce 2, être fermé à l'aide de ce bouchon isolant 22.

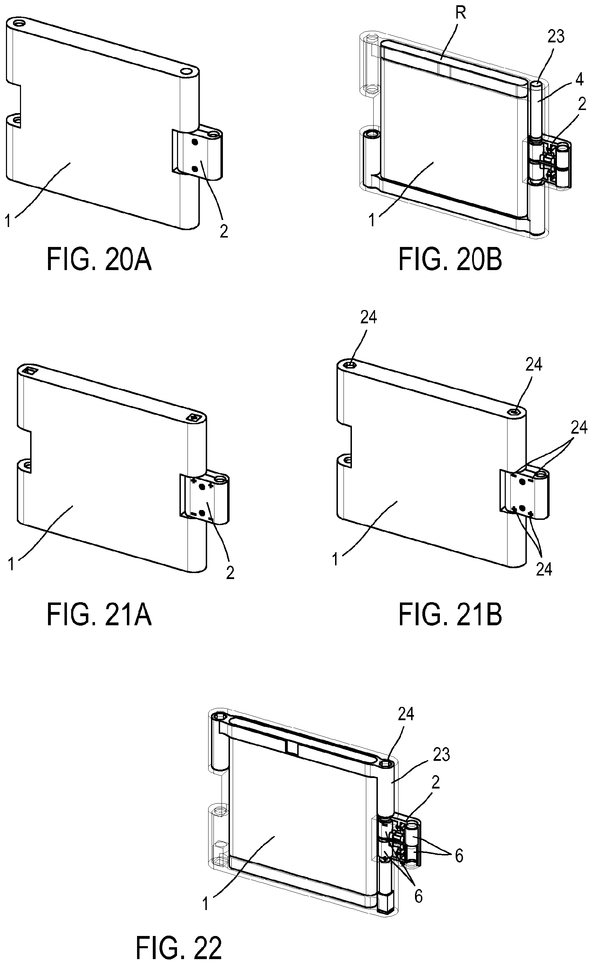

Les figures 20A et 20B représentent encore, en perspective, une autre variante d'assemblage et de connexion électrique entre une cellule 1 et une pièce 2 par l'intermédiaire d'un axe de raccordement 4, respectivement en vue pleine et en vue en transparence.

Dans cette variante, le montage à la main par un opérateur consiste à utiliser un axe de raccordement 4 dont une partie 23 est enrobée d'un matériau isolant. L'axe de raccordement 4 est alors réalisé de façon à ce que lors du montage, lorsqu'il met en contact la cellule 1 et la pièce d'assemblage et de connexion électrique 2, la partie qui n'est pas encore rentrée dans la cellule 1 soit la partie enrobée 23. Pour l'utilisation de ce type d'axe de raccordement 4, un dimensionnement spécifique peut être nécessaire, comme précisé par la suite. De plus, contrairement à l'exemple des figures 19A et 19B, avec ce type d'axe de raccordement 4, il n'y a plus de trou à boucher, la partie 23 de l'axe de raccordement 4 arrivant à flanc du trou étant enrobée du matériau isolant.

En outre, les figures 21A et 21B représentent, en perspective, un autre exemple d'assemblage et de connexion électrique entre une cellule 1 et une pièce 2 par l'intermédiaire d'un axe de raccordement 4 comportant une partie enrobée d'un matériau isolant avec détrompeur, respectivement en vue de dessus et en vue de dessous. De plus, la figure 22 représente la variante des figures 21A et 21B en transparence.

Pour éviter toute erreur lors du montage pouvant conduire à la dégradation des cellules 1, il peut être utile d'utiliser des détrompeurs 24 pour indiquer les différentes bornes B+ ou B- et/ou le schéma électrique et/ou le sens de montage. Il est ainsi possible d'utiliser un détrompeur physique 24 sur la partie de l'axe de raccordement 4 montée serrée, par exemple avec des axes dont la forme de la tête est différente entre partie positive et négative. Dans le cas où une partie de l'axe de raccordement 4 est montée en force, ce type de détrompeur est tel que la tête de l'axe 4 est préférentiellement plus petite que son diamètre nominal si la partie emmanchée est dans la pièce 2. Si au contraire, la partie emmanchée est dans la cellule 1, la tête de l'axe de raccordement 4 est préférentiellement plus grande que son diamètre nominal. Pour la partie montée glissante de l'axe de raccordement 4 devant permettre une rotation, l'utilisation d'un détrompeur 24 physique est plus difficile, mais peut par exemple résulter de tailles d'axes de raccordement 4 différentes entre les deux bornes. Il peut aussi être possible d'utiliser un détrompeur 24 visuel représentant par exemple le schéma électrique de la pièce 2 ou le signe des bornes. Ces détrompeurs 24 visuels peuvent se présenter sous la forme de dessins en relief et/ou en couleur, comme par exemple représenté sur la pièce 2 des figures 21A et 21B.

Dans l'exemple représenté sur la figure 22, l'axe de raccordement 4 peut comporter une partie enrobée 23 avec un matériau isolant, laquelle comporte également un détrompeur 24 sur la tête de l'axe de raccordement 4.

Pour la sécurité des opérateurs et/ou des utilisateurs des pièces 2 et cellules 1 conformes à l'invention, les pièces 2 et/ou les cellules 1 peuvent être réalisées dans un matériau ou assemblage de matériaux répondant aux exigences mécaniques, thermiques et électriques assurant le bon fonctionnement des cellules 1 dans leur environnement. On peut ainsi envisager par exemple une résine thermodurcissable (par exemple, époxy, vinylique, méthacryliques, silicone, polyuréthane, polyimides, phénoliques, formica, bakélite, polyesters insaturés) ou thermoplastique (par exemple, ABS, HDPE, LDPE, LLDPE, PA, PEEK, PE, PET, PETE, PC, PMMA, POM, PP, PS, PPS, PTFE, PVC), chargée en fibres ou renforcée par une matrice tissée ou non tissée, par exemple, carbone, aramide, verre, céramiques (par exemple, carbure de silicium, alumine, oxyde de silicium, mullite, nitrure d'aluminium, nitrure de bore, nitrure de silicium, oxyde de zirconium, zircone), fibres bio-sourcées (par exemple, lin, chanvre, ortie, bananier, noix de coco, palmier, dattier, bambou).

Pour modifier les caractéristiques de ce matériau, on peut ajouter des charges ou des additifs. On peut aussi utiliser un matériau métallique (par exemple, fer, acier, acier inoxydable, aluminium) à condition de l'isoler de toute partie traversée par un courant (notamment rives, collecteurs de courant, bornes, axes de raccordement, câblage, ...).

Par ailleurs, pour permettre la modularité du positionnement des cellules 1 de géométrie prismatique entre elles, l'épaisseur maximale de la pièce d'assemblage et de connexion 2 est préférentiellement égale à celle des cellules 1 qu'elle connecte. Par ailleurs, l'entraxe de la pièce 2 est préférentiellement égal à l'épaisseur e des cellules 1 qu'elle connecte. Dans certains cas, l'entraxe peut être supérieur, ce qui crée un espace interstitiel 16 entre les cellules 1, permettant notamment d'y placer un dispositif de refroidissement 15 comme décrit précédemment, un capteur, un système de sécurité, entre autres. La hauteur de la pièce d'assemblage et de connexion 2 peut être égale à la hauteur des cellules 1 qu'elle connecte, diminuée de la hauteur des deux bornes des cellules 1.

Pour les cellules 1 de géométrie d'architecture cylindrique, la pièce d'assemblage et de connexion 2 peut être cylindrique, voire encore prismatique arrondie. Pour une pièce 2 cylindrique, le rayon maximal peut être égal au rayon des cellules 1 diminué de la hauteur d'une borne d'une cellule 1. Pour une pièce 2 prismatique, l'épaisseur maximale peut être égale au diamètre des cellules 1, la hauteur maximale peut être égale au diamètre des cellules 1 diminué de la hauteur des deux bornes des cellules 1, l'entraxe minimal pouvant être égal au diamètre des cellules 1.

Pour un axe de raccordement 4 dont une partie 23 est enrobée dans un matériau isolant, la longueur de la partie insérée dans la borne de la cellule 1 est préférentiellement supérieure à celle de la partie insérée dans la pièce d'assemblage et de connexion 2. La longueur minimale d'enrobage est préférentiellement supérieure à la longueur insérée dans la pièce d'assemblage et de connexion 2. Dans ce cas, la longueur insérée dans la borne de la cellule 1 est préférentiellement supérieure à celle de la partie enrobée 23 pour laisser suffisamment passer le courant électrique dans la borne.

La surface limitant le passage du courant électrique est avantageusement la plus petite surface perpendiculaire au flux de courant. Elle peut être dimensionnée en fonction des applications et du courant électrique. Préférentiellement, cette surface est déterminée par un calcul de thermique en fonction des caractéristiques électriques et thermiques du conducteur, de l'isolant et de l'environnement. De façon empirique, un premier dimensionnement peut être effectué en utilisant une densité de courant maximale de 5 A.mm⁻² dans le cuivre, de 3 A.mm⁻² dans l'aluminium et de 1, 15 A.mm⁻² dans le nickel. Plus particulièrement, la surface limitant le passage du courant peut être la surface développée de contact entre l'axe de raccordement 4 et le collecteur de courant 6 (de la cellule 1 ou de la pièce 2) ou la section de l'axe de raccordement 4, ou encore la section de son câblage interne.

Ainsi, l'invention peut permettre à la fois un assemblage mécanique de deux cellules de stockage d'énergie électrique 1 entre elles et leur connexion électrique. Cet assemblage mécanique et cette connexion électrique sont avantageusement effectués par l'intermédiaire des axes de raccordement 4 réalisés dans un matériau conducteur et qui permettent d'assembler les cellules 1 et les pièces d'assemblage et de connexion électrique 2. La pièce 2 peut permettre la modularité de l'assemblage en étant fixée à chacune des deux cellules 1 par une liaison pivot, ce qui rend possible la rotation à 360° suivant un axe d'une cellule 1 par rapport à une autre. De plus, suivant l'architecture des cellules 1, un câblage 19 interne de la pièce 2 peut permettre de monter les cellules 1 en parallèle ou en série. La sécurité des opérateurs, concernant les risques électriques, peut être assurée à la fois par un faible diamètre des trous permettant l'accès aux bornes, ainsi que par le bouchage des trous après l'insertion de l'axe de raccordement 4, avec un bouchon d'un matériau non conducteur 22 ou par l'utilisation d'un axe de raccordement 4 dont une partie 23 est enrobée d'un matériau non conducteur, cette partie 23 pouvant être une extrémité de l'axe 4 notamment.

Dans chacun des modes de réalisation décrits précédemment, la partie extérieure de la pièce 2, en particulier les demi-coques formant le revêtement extérieur de la pièce 2, comporte un matériau isolant électriquement pour des raisons de sécurité électrique.

Bien entendu, l'invention n'est pas limitée aux exemples de réalisation qui viennent d'être décrits. Diverses modifications peuvent y être apportées par l'homme du métier.

L'expression « comportant un » doit être comprise comme étant synonyme de « comportant au moins un », sauf si le contraire est spécifié.

## Revendications

1. Pièce d'assemblage et de connexion électrique (2) d'au moins deux cellules de stockage d'énergie électrique (1), destinées à être intégrées au sein d'un module électrique d'assemblage (20) d'un système de stockage d'énergie, **caractérisée en ce que** la pièce (2) comporte des premier (3a) et deuxième (3b) moyens de raccordement de la pièce (2) respectivement auxdites au moins deux cellules de stockage d'énergie électrique (1), **caractérisé en ce que** les premier (3a) et deuxième (3b) moyens de raccordement étant configurés pour permettre le passage et le montage en rotation d'axes de raccordement (4) permettant l'assemblage et la connexion électrique entre la pièce (2) et chacune desdites au moins deux cellules de stockage d'énergie électrique (1), les premier (3a) et deuxième (3b) moyens de raccordement comportant respectivement des premier (5a) et deuxième (5b) logements aptes à être traversés par les axes de raccordement (4) pour l'assemblage et la connexion électrique de la pièce (2) avec chacune desdites au moins deux cellules de stockage d'énergie électrique (1),
et **en ce que** la partie extérieure de la pièce d'assemblage et de connexion électrique (2) comporte un matériau isolant électriquement.

2. Pièce selon la revendication 1, **caractérisée en ce que** chacun des premier (5a) et deuxième (5b) logements comporte au moins un collecteur de courant (6) négatif ou positif, notamment sous forme au moins partiellement cylindrique, destiné à épouser au moins partiellement la forme d'un axe de raccordement (4).

3. Pièce selon la revendication 1 ou 2, **caractérisée en ce que** les premier (5a) et deuxième (5b) logements sont formés dans la pièce (2) de façon sensiblement parallèle entre eux.

4. Pièce selon la revendication 1 ou 2, **caractérisée en ce que** les premier (5a) et deuxième (5b) logements sont formés dans la pièce (2) de façon sensiblement orthogonale entre eux.

5. Pièce selon la revendication 1 ou 2, **caractérisée en ce que** la pièce (2) est divisée en au moins deux parties (2a, 2b) aptes à être entraînées en rotation l'une par rapport à l'autre et **en ce qu'**elle comporte un système d'accroche (14) de moyens de maintien en position (13) de plusieurs cellules (1) entre elles, notamment sous la forme d'une gorge (14), ou d'un trou (14) réalisé de part en part à mi-distance de deux axes de raccordement (4).

6. Cellule de stockage d'énergie électrique (1), destinée à être intégrée au sein d'un module électrique d'assemblage (20) d'un système de stockage d'énergie, **caractérisée en ce que** la cellule (1) est configurée pour être assemblée et connectée électriquement à au moins une pièce d'assemblage et de connexion électrique (2) selon l'une quelconque des revendications précédentes, la cellule (1) comportant, sur une première face (la), un premier moyen de réception (7a) d'une première pièce d'assemblage et de connexion électrique (2) et, sur une deuxième face (1b), opposée à la première face (la), un deuxième moyen de réception (7b) d'une deuxième pièce d'assemblage et de connexion électrique (2), chacun des premier (7a) et deuxième (7b) moyens de réception étant configuré pour permettre le passage et le montage en rotation d'un axe de raccordement (4) de façon à permettre respectivement l'assemblage et la connexion électrique des première et deuxième pièces d'assemblage et de connexion électrique (2) avec la cellule de stockage d'énergie électrique (1),
la première face (1a) de la cellule (1) comportant deux portions de cellule (8a) s'étendant en relief depuis la première face (1a) et définissant entre elles un premier logement (9a) pour recevoir la première pièce d'assemblage et de connexion électrique (2), et la deuxième face (1b) de la cellule (1) comportant deux portions de cellule (8b) s'étendant en relief depuis la deuxième face (1b) et définissant entre elles un deuxième logement (9b) pour recevoir la deuxième pièce d'assemblage et de connexion électrique (2).

7. Cellule selon la revendication 6, **caractérisée en ce que** chaque portion de cellule (8a, 8b) en relief comporte un trou (9) permettant le passage d'un axe de raccordement (4) pour l'assemblage et la connexion électrique de la cellule (1) avec une pièce d'assemblage et de connexion électrique (2).

8. Cellule selon la revendication 6 ou 7, **caractérisée en ce que** les deux portions de cellule (8a) de la première face (1a) constituent deux bornes (B+; B-) de même polarité et **en ce que** les deux portions de cellule (8b) de la deuxième face (1b) constituent deux bornes (B-; B+) de même polarité, opposée à la polarité des deux portions de cellule (8a) de la première face (la), de façon à permettre un montage en série de la cellule (1).

9. Cellule selon la revendication 6 ou 7, **caractérisée en ce que** les deux portions de cellule (8a) de la première face (1a) constituent respectivement une borne de polarité positive (B+) et une borne de polarité négative (B-) et **en ce que** les deux portions de cellule (8b) de la deuxième face (1b) constituent respectivement une borne de polarité positive (B+) et une borne de polarité négative (B-), les bornes de polarité positive (B+) étant notamment situées d'un même côté de la cellule (1) et les bornes de polarité négative (B-) étant notamment situées d'un même autre côté de la cellule (1), de façon à permettre un montage en série ou en parallèle de la cellule (1).

10. Cellule selon l'une quelconque des revendications 6 à 9, **caractérisée en ce qu'**elle est de géométrie d'architecture prismatique, comportant notamment un premier moyen de réception (7a) sur une première face (1a) de la cellule (1) et un deuxième moyen de réception (7b) sur une deuxième face (1b) de la cellule (1), les première (1a) et deuxième (1b) faces étant opposées l'une à l'autre et situées notamment dans l'épaisseur (e) de la cellule (1).

11. Cellule selon l'une quelconque des revendications 6 à 9, **caractérisée en ce qu'**elle est de géométrie d'architecture cylindrique, comportant notamment un premier moyen de réception (7a) sur une première face (1a) de la cellule (1) et un deuxième moyen de réception (7b) sur une deuxième face (1b) de la cellule (1), les première (1a) et deuxième (1b) faces étant opposées l'une à l'autre et situées notamment sur les deux faces planes de la cellule (1).

12. Module électrique, notamment électrochimique, d'assemblage (20) d'un système de stockage d'énergie, **caractérisé en ce qu'**il comporte :
- une pluralité de pièces d'assemblage et de connexion électrique (2) selon l'une quelconque des revendications 1 à 5,
- une pluralité de cellules de stockage d'énergie électrique (1), notamment de cellules électrochimiques élémentaires (1), selon l'une quelconque des revendications 6 à 11, chaque cellule (1) étant assemblée et connectée électriquement à au moins une autre cellule (1) du même type par l'intermédiaire d'au moins une des pièces d'assemblage et de connexion électrique (2).

13. Procédé de fabrication d'une pièce d'assemblage et de connexion électrique (2) selon l'une quelconque des revendications 1 à 5 et/ou d'une cellule de stockage d'énergie électrique (1) selon l'une quelconque des revendications 6 à 11, **caractérisé en ce qu'**il comporte une ou plusieurs des étapes suivantes :
- réaliser deux demi-parties semblables destinées à former ensemble la pièce d'assemblage et de connexion électrique (2),
- assembler les deux demi-parties pour former la pièce d'assemblage et de connexion électrique (2),
- réaliser la cellule de stockage d'énergie électrique (1) à partir d'un coeur de cellule de stockage d'énergie électrique sous la forme d'un bobineau ou d'un stack.

## Patentansprüche

1. Element zum Montieren und elektrischen Verbinden (2) von wenigstens zwei Speicherzellen für elektrische Energie (1), welche dazu vorgesehen sind, innerhalb eines elektrischen Montagemoduls (20) eines Energiespeichersystems integriert zu sein,
**dadurch gekennzeichnet, dass** das Element (2) erste (3a) und zweite (3b) Mittel zum jeweiligen Anschließen des Elements (2) an die wenigstens zwei Speicherzellen für elektrische Energie (1) umfasst, **dadurch gekennzeichnet, dass** die ersten (3a) und zweiten (3b) Mittel zum Anschließen dazu eingerichtet sind, den Durchgang und die Anbringung in Rotation von Anschlussachsen (4) zu erlauben, was die Montage und die elektrische Verbindung zwischen dem Element (2) und jeder der wenigstens zwei Speicherzellen für elektrische Energie (1) erlaubt,
wobei die ersten (3a) und zweiten (3b) Mittel zum Anschließen jeweils erste (5a) und zweite (5b) Aufnahmen umfassen, welche in der Lage sind, von den Anschlussachsen (4) für das Montieren und elektrische Verbinden des Elements (2) mit jeder der wenigstens zwei Speicherzellen für elektrische Energie (1) durchquert zu werden,
und dadurch, dass der äußere Abschnitt des Elements zum Montieren und zum elektrischen Verbinden (2) ein elektrisch isolierendes Material umfasst.

2. Element nach Anspruch 1, **dadurch gekennzeichnet, dass** jede aus den ersten (5a) und zweiten (5b) Aufnahmen wenigstens einen negativen oder positiven Stromsammler (6) umfasst, insbesondere in wenigstens abschnittsweise zylindrischer Form, welcher dazu vorgesehen ist, wenigstens teilweise an die Form einer Anschlussachse (4) angepasst zu sein.

3. Element nach Anspruch 1 oder 2, **dadurch gekennzeichnet, dass** die ersten (5a) und zweiten (5b) Aufnahmen in dem Element (2) in im Wesentlichen zueinander paralleler Weise gebildet sind.

4. Element nach Anspruch 1 oder 2, **dadurch gekennzeichnet, dass** die ersten (5a) und zweiten (5b) Aufnahmen in dem Element (2) in im Wesentlichen zueinander orthogonalen Weise gebildet sind.

5. Element nach Anspruch 1 oder 2, **dadurch gekennzeichnet, dass** das Element (2) in wenigstens zwei Teile (2a, 2b) unterteilt ist, welche in der Lage sind, gegeneinander in Rotation angetrieben zu werden, und dass es ein System zum Aufhängen (14) von Mitteln zum Halten in Position (13) von mehreren Zellen (1) untereinander umfasst, insbesondere in der Form eines Halses (14) oder eines Lochs, welches vollständig in halbem Abstand von den beiden Anschlussachsen (4) gebildet ist.

6. Speicherzelle für elektrische Energie (1), welche dazu vorgesehen ist, innerhalb eines elektrischen Montagemoduls (20) eines Energiespeichersystems integriert zu sein,
**dadurch gekennzeichnet, dass** die Zelle (1) dazu eingerichtet ist, an wenigstens einem Element zum Montieren und elektrischen Verbinden (2) nach einem der vorhergehenden Ansprüche montiert und elektrisch verbunden zu sein, wobei die Zelle (1) an einer ersten Fläche (1a) ein erstes Mittel zum Aufnehmen (7a) eines ersten Elements zum Montieren und elektrischen Verbinden (2) und an einer zweiten Fläche (1b) gegenüber der ersten Fläche (1a) ein zweites Mittel zum Aufnehmen (7b) eines zweiten Elements zum Montieren und elektrischen Verbinden (2) umfasst, wobei jedes aus den ersten (7a) und zweiten (7b) Mitteln zum Aufnehmen dazu eingerichtet ist, den Durchgang und das Montieren in Rotation von einer Anschlussachse (4) in einer Weise zu erlauben, welche jeweils das Montieren und das elektrische Verbinden von ersten und zweiten Elementen zum Montieren und elektrischen Verbinden (2) mit der Speicherzelle für elektrische Energie (1) erlaubt,
wobei die erste Fläche (1a) der Zelle (1) zwei Zellenabschnitte (8a) umfasst, welche sich vorstehend von der ersten Fläche (1a) erstrecken und untereinander eine erste Aufnahme (9a) zum Aufnehmen des ersten Elements zum Montieren und elektrischen Verbinden (2) definieren, und wobei die zweite Fläche (1b) der Zelle (1) zwei Zellenabschnitte (8b) umfasst, welche sich vorstehend von der zweiten Fläche (1b) erstrecken und untereinander eine zweite Aufnahme (9b) zum Aufnehmen des zweiten Elements zum Montieren und elektrischen Verbinden (2) definieren.

7. Zelle nach Anspruch 6, **dadurch gekennzeichnet, dass** jeder vorstehende Zellenabschnitt (8a, 8b) ein Loch (9) umfasst, welches den Durchgang einer Anschlussachse (4) zum Montieren und elektrischen Verbinden der Zelle (1) mit einem Element zum Montieren und elektrischen Verbinden (2) erlaubt.

8. Zelle nach Anspruch 6 oder 7, **dadurch gekennzeichnet, dass** die beiden Zellenabschnitte (8a) der ersten Fläche (1a) zwei Klemmen (B+; B-) von gleicher Polarität bilden, und dass die beiden Zellenabschnitte (8b) der zweiten Fläche (1b) zwei Klemmen (B-; B+) von gleicher Polarität bilden, welche der Polarität der beiden Zellenabschnitte (8a) der ersten Fläche (1a) entgegengesetzt sind, so dass eine Montage der Zelle (1) in Reihe ermöglicht wird.

9. Zelle nach Anspruch 6 oder 7, **dadurch gekennzeichnet, dass** die beiden Zellenabschnitte (8a) der ersten Fläche (1a) jeweils eine Klemme von positiver Polarität (B+) und eine Klemme von negativer Polarität (B-) bilden, und dass die beiden Zellenabschnitte (8b) der zweiten Fläche (1b) jeweils eine Klemme von positiver Polarität (B+) und eine Klemme von negativer Polarität (B-) bilden, wobei die Klemmen von positiver Polarität (B+) insbesondere an einer gleichen Seite der Zelle (1) platziert sind und die Klemmen von negativer Polarität (B-) insbesondere an einer gleichen Seite der Zelle (1) platziert sind, so dass ein Montieren der Zelle (1) in Reihe oder parallel ermöglicht wird.

10. Zelle nach einem der Ansprüche 6 bis 9, **dadurch gekennzeichnet, dass** sie von prismatischer Architekturgeometrie ist, insbesondere umfassend ein erstes Mittel zum Aufnehmen (7a) an einer ersten Fläche (1a) der Zelle (1) und ein zweites Mittel zum Aufnehmen (7b) an einer zweiten Fläche (1b) der Zelle (1), wobei sich die ersten (1a) und zweiten (1b) Flächen einander gegenüberliegen und insbesondere in der Dicke (e) der Zelle (1) platziert sind.

11. Zelle nach einem der Ansprüche 6 bis 9, **dadurch gekennzeichnet, dass** sie von zylindrischer Architekturgeometrie ist, insbesondere umfassend ein erstes Mittel zum Aufnehmen (7a) an einer ersten Fläche (1a) der Zelle (1) und ein zweites Mittel zum Aufnehmen (7b) an einer zweiten Fläche (1b) der Zelle (1), wobei sich die ersten (1a) und zweiten (1b) Flächen einander gegenüberliegen und insbesondere an den beiden ebenen Flächen der Zelle (1) platziert sind.

12. Elektrisches, insbesondere elektrochemisches, Montagemodul (20) für ein System zum Speichern von Energie, **dadurch gekennzeichnet, dass** es umfasst:
- eine Mehrzahl von Elementen zum Montieren und elektrischen Verbinden (2) nach einem der Ansprüche 1 bis 5,
- eine Mehrzahl von Zellen zum Speichern von elektrischer Energie (1), insbesondere elektrochemischen Elementarzellen (1), nach einem der Ansprüche 6 bis 11, wobei jede Zelle (1) mit wenigstens einer weiteren Zelle (1) vom gleichen Typ mittels wenigstens einem der Elemente zum Montieren und elektrischen Verbinden (2) montiert und elektrisch verbunden ist.

13. Verfahren zum Herstellen eines Elements zum Montieren und elektrischen Verbinden (2) nach einem der Ansprüche 1 bis 5 und/oder einer Zelle zum Speichern von elektrischer Energie (1) nach einem der Ansprüche 6 bis 11, **dadurch gekennzeichnet, dass** es einen oder mehrere der folgenden Schritte umfasst:
- Herstellen von zwei ähnlichen Halbstücken, welche dazu vorgesehen sind, zusammen das Element zum Montieren und elektrischen Verbinden (2) zu bilden,
- Montieren der beiden Halbstücke, um das Element zum Montieren und elektrischen Verbinden (2) zu bilden,
- Herstellen der Zelle zum Speichern von elektrischer Energie (1) ausgehend von einem Herz der Zelle zum Speichern von elektrischer Energie in der Form einer Spule oder eines Stacks.

## Claims

1. Assembly and electrical connection part (2) for at least two electrical energy storage cells (1), that will be included in an electric assembly module (20) of an energy storage system,
**characterised in that** the part (2) comprises first (3a) and second (3b) means of connecting the part (2) to said at least two electrical energy storage cells (1), **characterised in that** the first (3a) and second (3b) connection means being configured to enable the passage and assembly in rotation of connection pins (4) to assemble and electrically connect the part (2) to each of said at least two electrical energy storage cells (1),
the first (3a) and second (3b) connection means comprising first (5a) and second (5b) housings respectively through which connection pins (4) can pass for the assembly and electrical connection of the part (2) with each of said at least two electrical energy storage cells (1),
and **in that** the external part of the assembly and electrical connection part (2) comprises an electrically insulating material.

2. Part according to claim 1, **characterised in that** each of the first (5a) and second (5b) housings comprises at least one negative or positive current collector (6), particularly in at least a partially cylindrical form, that will at least partially match the shape of a connection pin (4).

3. Part according to claim 1 or 2, **characterised in that** the first (5a) and second (5b) housings are formed in the part (2) approximately parallel to each other.

4. Part according to claim 1 or 2, **characterised in that** the first (5a) and second (5b) housings are formed in the part (2) approximately orthogonal to each other.

5. Part according to claim 1 or 2, **characterised in that** the part (2) is divided in at least two portions (2a, 2b) that can be rotated relative to each other and **in that** it comprises a system (14) for fastening means (13) of retaining several cells (1) in position relative to each other, particularly in the form of a groove (14), or a hole (14) made on each side at mid-distance from the two connection pins (4).

6. Electrical energy storage cell (1), designed to be included within an electrical assembly module (20) of an energy storage system, **characterised in that** the cell (1) is configured to be assembled and electrically connected to at least one assembly and electrical connection part (2) according to any one of the previous claims, the cell (1) comprising a first means (7a) for reception of a first assembly and electrical connection part (2) on a first face (1a), and a second means (7b) for reception of a second assembly and electrical connection part (2) on a second face (1b), opposite the first face (1a), each of the first (7a) and second (7b) reception means being configured to allow the passage of a connection pin (4) for the assembly and electrical connection of the first and second assembly and electrical connection parts (2) with the electrical energy storage cell (1), the first face (1a) of the cell (1) comprising two cell portions (8a) extending in relief from the first face (1a) and defining a first housing (9a) between them to contain the first assembly and electrical connection part (2), and **in that** the second face (1b) of the cell (1) comprises two cell portions (8b) extending in relief from the second face (1b) and defining a second housing (9b) between them to contain the second assembly and electrical connection part (2).

7. Cell according to claim 6, **characterised in that** each cell portion (8a, 8b) in relief comprises a hole (9) for the passage of a connection pin (4) for the assembly and the electrical connection of the cell (1) with an assembly and electrical connection part (2).

8. Cell according to claim 6 or 7, **characterised in that** the two cell portions (8a) on the first face (1a) form two terminals (B+ ; B-) with the same polarity and **in that** the two cell portions (8b) of the second face (1b) form two terminals (B-; B+) with the same polarity, opposite the polarity of the two cell portions (8a) on the first face (1a), so that the cell (1) can be installed in series.

9. Cell according to claim 6 or 7, **characterised in that** the two cell portions (8a) on the first face (1a) form a positive polarity terminal (B+) and a negative polarity terminal (B-) respectively and **in that** the two cell portions (8b) on the second face (1b) form a positive polarity terminal (B+) and a negative polarity terminal (B-) respectively, the positive polarity terminals (B+) particularly being located on the same side as each other on one side of the cell and the negative polarity terminals (B-) particularly being located on the same side as each other and on the other side of the cell (1), so that the cell can be installed in series or in parallel.

10. Cell according to any one of claims 6 to 9, **characterised in that** it has a prismatic architectural geometry, particularly including a first reception means (7a) on a first face (1a) of the cell (1) and a second reception means (7b) on a second face (1b) of the cell (1), the first (1a) and second (1b) faces being opposite each other and particularly located within the thickness (e) of the cell (1).

11. Cell according to any one of claims 6 to 9, **characterised in that** it has a cylindrical architectural geometry, particularly comprising a first reception means (7a) on a first face (1a) of the cell (1) and a second reception means (7b) on a second face (1b) of the cell (1), the first (1a) and second (1b) faces being opposite each other and particularly located on the two plane faces of the cell (1).

12. Module for the electrical assembly (20), in particular elementary electrochemical cells (1), of an energy storage system, **characterised in that** it comprises:
- a plurality of assembly and electrical connection parts (2) according to any one of claims 1 to 5,
- a plurality of electrical energy storage cells (1) according to any one of claims 6 to 11, each cell (1) being assembled and electrically connected to at least one other cell (1) of the same type through at least one of the assembly and electrical connection parts (2).

13. Method of manufacturing an assembly and electrical connection part (2) according to any one of claims 1 to 5 and/or an electrical energy storage cell (1) according to any one of claims 6 to 11, **characterised in that** it comprises one or several of the following steps:
- make two similar half-parts designed to cooperate to form the assembly and electrical connection part (2),
- assemble the two half-parts to form the assembly and electrical connection part (2),
- make the electrical energy storage cell (1) from a core of an electrical energy storage cell in the form of a bobbin or a stack.
